(19) Europäisches Patentamt
European Patent Office
Office européen des brevets

(11) **EP 3 775 016 B1**

(12) **EUROPEAN PATENT SPECIFICATION**

(45) Date of publication and mention
of the grant of the patent:
**26.01.2022 Bulletin 2022/04**

(21) Application number: **19720059.5**

(22) Date of filing: **11.04.2019**

(51) International Patent Classification (IPC):
***C08K 3/26*** *(2006.01)*      ***C08K 5/00*** *(2006.01)*
***C08L 9/04*** *(2006.01)*

(52) Cooperative Patent Classification (CPC):
(C-Sets available)
**C08K 3/26; C08K 5/0025;** C08K 2003/265;
C08K 2201/005; C08K 2201/014        (Cont.)

(86) International application number:
**PCT/EP2019/059217**

(87) International publication number:
**WO 2019/197520 (17.10.2019 Gazette 2019/42)**

(54) **CALCIUM CARBONATE COMPRISING COMPOSITION FOR ELASTOMERIC FILM PREPARATION**

CALCIUMCARBONAT MIT ZUSAMMENSETZUNG FÜR DIE ELASTOMERFILMHERSTELLUNG

COMPOSITION DE CARBONATE DE CALCIUM COMPRENANT UNE COMPOSITION POUR PRÉPARATION DE FILM ÉLASTOMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.04.2018 MY PI2018701430**

(43) Date of publication of application:
**17.02.2021 Bulletin 2021/07**

(73) Proprietor: **Omya International AG
4665 Oftringen (CH)**

(72) Inventors:
• **LAM, Hon-Wan
  Jaya, 47610 (MY)**

• **NG, Chiew-Sum
  Shah Alam, 40470 (MY)**

(74) Representative: **Maiwald Patent- und
Rechtsanwaltsgesellschaft mbH
Elisenhof
Elisenstraße 3
80335 München (DE)**

(56) References cited:
WO-A1-2017/001857      US-A1- 2006 292 305
US-A1- 2011 196 083      US-A1- 2014 142 211

(52) Cooperative Patent Classification (CPC): (Cont.)

C-Sets
**C08K 3/26, C08L 9/04;**
**C08K 5/0025, C08L 9/04**

**Description**

The present invention concerns a composition for the preparation of an elastomeric film. Furthermore, the present invention concerns the use of such a composition for the preparation of an elastomeric film, a method for preparing an elastomeric film and an elastomeric film produced by the inventive method.

Elastomeric films are well known and are often made of natural rubber materials or synthetic rubber materials, especially if the elastomeric films are in the form of thin-walled, extensible articles such as gloves, balloons, condoms or finger cots. These thin-walled, extensible articles are usually made from compositions comprising latex, curing agents, stabilizers and optionally further components like coagulants, dyes etc. Typically, a former of an appropriate shape (optionally pre-coated with a coagulating solution) is dipped into a composition comprising latex once or several times to build up a layer of the desired thickness. The coated formers are dried afterwards to evaporate water and to leave behind a solid latex film. The film is further heated to vulcanize or cure the film in order to provide adequate mechanical and physical properties.

EP 1 962 626 B1 refers to a hand-friendly rubber glove article comprising a dried coating of an emulsified hand-friendly mixture comprising at least one water-soluble humectant moisturizer, at least one water-soluble lubricant, at least one water-soluble surfactant, and at least one water-insoluble occlusive moisturizer, which is finely and substantially uniformly dispersed within the mixture, which is transferred to the skin of a wearer upon activation with skin-generated moisture, and, optionally, a fabric-adherent cuff region and/or a texturized surface and methods of making the emulsified hand-friendly mixture and the glove article.

GB 2501940 A refers to a method of manufacturing nitrile rubber latex medical examination gloves during which (a) the glove formers are dipped into a coagulant solution containing divalent calcium cations and calcium carbonate particles, and during which (b) the coated glove formers are then dipped into a nitrile rubber latex dispersion containing triclosan that is not in a paste form, and during which (c) the nitrile rubber latex gloves are finally placed into packaging utilising a clear coat varnish that it is impregnated with a phenolic chlorine compound, micronised nanosilver colloid, and a quaternary compound.

EP 1 904 569 B1 refers to a composition for producing an elastomeric film comprising: a synthetic polymer, sulphur, and a metal-oxide cross-linking agent. Also disclosed is a multiple-coating method of manufacturing an elastomeric film comprising the steps of: (i) providing a composition comprising a synthetic polymer, a metal-oxide cross linking agent, (ii) contacting the composition with a mould to form a layer of composition on the mould, (iii) contacting the layer of composition on the mould with a further amount of the composition to form a further layer, (iv) drying the composition, and (v) curing the composition.

Often fillers or pigments are added to the compositions for the preparation of the elastomeric films for several reasons. On the one side fillers or pigments can lower the costs of the elastomeric films by replacing the more expensive latex or rubber material with less expensive fillers or pigments. On the other side the properties of the elastomeric films can be improved by the addition of fillers or pigments, especially the physical properties like stiffness, or mechanical strength like tear strength or tensile strength but also the chemical properties like chemical resistance or UV resistance.

Elastomeric films comprising fillers are known in the prior art, for example, from WO 2004/044037 A1 which refers to a synthetic latex compound composition for producing non-staining dipped rubber articles such as a non-staining glove, condom, finger cot and balloon, comprising a synthetic carboxylated acrylonitrile butadiene rubber or a synthetic carboxylated butadiene co-polymer rubber, free from any sulphur or sulphur containing chemicals or accelerators. The sole cross-linking system comprises only polyvalent metal chemicals like calcium carbonate.

WO 2012/087460 A1 refers to a reduced allergenicity natural latex rubber for use in such products as latex gloves and similar medical and consumer goods, and to methods of production and use thereof. The rubber compositions comprise a natural latex and a functionalized mineral filler.

US 2013/0316107 A1 refers to an elastomeric composition for making elastomeric articles having at least one layer, such as but not limited to condoms, which have a deformation stress or modulus below about 1.5 MPa at 500% extension, comprising at least one polymeric material, at least one plasticizer and optionally at least one coating. Furthermore, it is disclosed that filler may be included in the elastomeric formulation to add strength and reduce cost, wherein useful filler are selected from inorganic fillers such as calcium carbonate, talc, titanium oxide, silica, clay, carbon black, magnesium carbonate, alumina, and mixtures thereof.

However, there is a continuous need for alternative compositions for the preparation of elastomeric films having improved properties compared to already existing elastomeric films. In particular, a need exists for elastomeric films having superior physical properties and especially superior mechanical properties and/or superior chemical properties.

In this respect, one object of the present invention may be seen in the provision of alternative compositions for the preparation of elastomeric films, which provide a better/improved or supplementary performance than existing elastomeric films. In particular the elastomeric films formed from these compositions should have good or improved mechanical properties, for example, good or improved ultimate tensile strength, modulus, and/or elongation at break in order to avoid failure in application of said elastomeric films.

Still another object of the present invention may be seen in the provision of alternative compositions for the preparation of elastomeric films that enable easy performance on large scale at low cost. Furthermore, it is desirable that these compositions as well as the obtained elastomeric films or materials are non-toxic, skin-friendly and environmentally friendly.

The foregoing and other objects are solved by the subject-matter of the present invention as defined in the independent claims.

A first aspect of the present invention relates to a composition for the preparation of an elastomeric film comprising a) at least one latex, b) at least one curing system, and c) at least one filler composition, wherein the filler composition consists of a mixture of i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; and ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20, wherein the weight median particle size $d_{50}$ value of the first and the second calcium carbonate-comprising material differs by 0.1 $\mu$m to 1.1 $\mu$m.

The inventors surprisingly found that the inventive filler composition may be effectively used in compositions for the preparation of elastomeric films. The inventors found that an elastomeric film prepared from a composition comprising such a filler provides very good mechanical properties, especially very good modulus, very good elongation at break, and/or very good ultimate tensile strength. As a consequence, the risk of failure in application of said elastomeric film such as pinhole defects, is minimized. The inventors found that it is crucial that the filler composition consists of two different calcium carbonate-comprising materials as claimed in claim 1. More precisely, it has been found by the inventors that improved properties can be obtained if the weight median particle size $d_{50}$ value of the two calcium carbonate-comprising materials is very low, namely is in the range from 0.6 $\mu$m to 2 $\mu$m and in the range from 0.3 $\mu$m to 1 $\mu$m. However, as already set out above, the filler composition has to consist of two different calcium carbonate-comprising materials and, therefore, the weight median particle size $d_{50}$ value of the first and the second calcium carbonate-comprising material cannot be the same but has to differ by 0.1 $\mu$m to 1.1 $\mu$m. Furthermore, both calcium carbonate-comprising materials have to have a high steepness factor which is another measure for the particle size distribution. More precisely, the inventors found that the first calcium carbonate-comprising material has to have a steepness factor of at least 40 and the second calcium carbonate-comprising material has to have a steepness factor of at least 20. By such a combination of different calcium carbonate comprising materials in the filler composition, improved properties of the composition and the resulting elastomeric film or material can be achieved. Furthermore, the inventors found that such a composition as well as the elastomeric film prepared from such a composition can be produced in a very simple manner on a large scale and very inexpensively. The compositions comprising the inventive filler as well as the obtained elastomeric films and materials are also non-toxic, skin-friendly and environmentally friendly and, therefore, can be used in a very safe and very comfortable way.

The elastomeric films and materials prepared from the inventive compositions may additionally have good chemical properties.

According to another aspect of the present invention, the use of the composition according to the present invention for the preparation of an elastomeric film and preferably for the preparation of a glove is provided.

According to another aspect of the present invention a method for preparing an elastomeric film is provided, the method comprising the steps of

A) providing a coagulant solution and
B) providing at least one composition for the preparation of an elastomeric film according to claims 1 to 13 and
C) providing at least one former,
D) dipping the former of step C) in the solution of step A),
E) drying or partially drying the coagulant-dipped former of step D),
F) dipping the coagulant-coated former of step E) into the composition of step B) to produce a layer of the composition of step B) on the coagulant-coated former,
G) drying the layer of the composition formed on the coagulant-coated former,
H) optionally dipping the former obtained in step G) into the composition of step B) to produce a further layer of the composition of step B) and drying said further layer,
I) optionally repeating step H),
J) leaching the former obtained in step G) and/or step H) and/or step I) in an aqueous solution,
K) heating the former obtained in step J) to produce the total elastomeric film,
L) stripping the total elastomeric film from the former.

According to another aspect of the present invention, an elastomeric film produced by the inventive method is provided.

Advantageous embodiments of the composition according to the present invention and embodiments of the use of such a composition for the preparation of an elastomeric film, embodiments of the method for preparing an elastomeric film and embodiments of the elastomeric film produced by the inventive method according to the present invention are defined in the corresponding subclaims.

According to one embodiment, the at least one latex of i) is a natural latex, a synthetic latex or a mixture thereof and preferably is selected from the group consisting of natural latex, acrylonitrile-butadiene latex, nitrile latex, carboxylated nitrile latex, carboxylated polyacrylonitrile-butadiene latex, gutta-percha latex, butadiene latex, acrylate latex, fluoro latex, styrene-butadiene latex, polystyrene-butadiene latex, styrene-isoprene-butadiene latex, synthetic isoprene latex, polyisoprene latex, ethylene-propylene latex, ethylene-propylene-diene latex, butyl latex, ethylene-vinyl acetate latex, ethylene-methyl acrylate latex, epoxide latex, polynorbornene latex, polyalkenylenes, silicone latex, polyurethane latex, thiokol latex, halobutyl latex, chloropolyethylenes, chlorosulfonyl polyethylenes, polychloroprene latex, polyphosphazenes and mixtures thereof and most preferably is acrylonitrile-butadiene latex and/or carboxylated polyacrylonitrile-butadiene latex.

According to another embodiment, the composition comprises at least one stabilizer and preferably the at least one stabilizer is sodium dodecyl sulfate.

According to another embodiment, the first and/or the second calcium carbonate-comprising material is/are selected from the group consisting of ground calcium carbonate, preferably marble, limestone and/or chalk, precipitated calcium carbonate, preferably vaterite, calcite and/or aragonite, and mixtures thereof, more preferably the calcium carbonate-comprising material is a ground calcium carbonate.

According to another embodiment, the first calcium carbonate-comprising material has i) a weight median particle size $d_{50}$ value in the range from 0.6 $\mu$m to 2 $\mu$m, preferably in the range from 0.7 $\mu$m to 1.5 $\mu$m, even more preferably in the range from 0.8 $\mu$m to 1.0 $\mu$m and most preferably of about 0.9 $\mu$m, and/or ii) a top cut ($d_{98}$) of $\leq$ 20 $\mu$m, preferably of $\leq$ 10 $\mu$m, more preferably of $\leq$ 8 $\mu$m, even more preferably of $\leq$ 5 $\mu$m and most preferably of about 4 $\mu$m, and/or iii) a residue on a 45 $\mu$m sieve of $\leq$ 1 wt.-% based on the total dry weight of the first calcium carbonate-comprising material, preferably of $\leq$ 0.5 wt.-%, even more preferably of $\leq$ 0.1 wt.-%, even more preferably of $\leq$ 0.05 wt.-% and most preferably of about 0.01 wt.-%, and/or iv) the amount of particles < 2 $\mu$m is $\geq$ 80 wt.-%, based on the total dry weight of the first calcium carbonate-comprising material, preferably $\geq$ 83 wt.-%, even more preferably $\geq$ 86 wt.-%, and most preferably is about 90 wt.-%, and/or v) a residual total moisture content of from 0.01 wt.-% to 1.5 wt.-%, based on the total dry weight of the first calcium carbonate-comprising material, preferably from 0.1 wt.-% to 1.0 wt.-%, more preferably from 0.2 wt.-% to 0.8 wt.-%, even more preferably from 0.5 wt.-% to 0.7 wt.-% and most preferably of about 0.6 wt.-%, and/or vi) a calcium carbonate content of at least 93 wt.-%, based on the total dry weight of the first calcium carbonate-comprising material, preferably of at least 95 wt.-%, even more preferably of at least 97 wt.-% and most preferably of about 98 wt.-%, and/or vii) a HCl insoluble content of $\leq$ 10 wt.-% based on the total dry weight of the first calcium carbonate-comprising material, preferably of $\leq$ 7 wt.-%, even more preferably of $\leq$ 5 wt.-%, even more preferably of $\leq$ 3 wt.-% and most preferably of about 2 wt.-%, and/or viii) a steepness factor of at least 45, preferably of at least 50 and most preferably of at least 60.

According to another embodiment, the first calcium carbonate-comprising material is used in form of a powder.

According to another embodiment, the second calcium carbonate-comprising material has i) a weight median particle size $d_{50}$ value in the range from 0.4 $\mu$m to 0.9 $\mu$m, preferably in the range from 0.5 $\mu$m to 0.8 $\mu$m, even more preferably in the range from 0.5 $\mu$m to 0.7 $\mu$m and most preferably of about 0.6 $\mu$m, and/or ii) a top cut ($d_{98}$) of $\leq$ 20 $\mu$m, preferably of $\leq$ 10 $\mu$m, more preferably of $\leq$ 8 $\mu$m, even more preferably of $\leq$ 5 $\mu$m and most preferably of about 4 $\mu$m, and/or iii) a residue on a 45 $\mu$m sieve of $\leq$ 1 wt.-% based on the total dry weight of the second calcium carbonate-comprising material, preferably of $\leq$ 0.5 wt.-%, even more preferably of $\leq$ 0.1 wt.-%, even more preferably of $\leq$ 0.05 wt.-% and most preferably of about 0.01 wt.-%, and/or iv) the amount of particles < 1 $\mu$m is $\geq$ 70 wt.-%, based on the total dry weight of the second calcium carbonate-comprising material, preferably $\geq$ 73 wt.-%, even more preferably $\geq$ 76 wt.-%, and most preferably is about 80 wt.-%, and/or v) a calcium carbonate content of at least 93 wt.-%, based on the total dry weight of the second calcium carbonate-comprising material, preferably of at least 95 wt.-%, even more preferably of at least 97 wt.-% and most preferably of about 97.5 wt.-%, and/or vi) a HCl insoluble content of $\leq$ 10 wt.-% based on the total dry weight of the second calcium carbonate-comprising material, preferably of $\leq$ 7 wt.-%, even more preferably of $\leq$ 5 wt.-%, even more preferably of $\leq$ 3 wt.-%, even more preferably of $\leq$ 2 wt.-% and most preferably of about 0.9 wt.-%, and/or vii) a steepness factor of at least 22, preferably of at least 24 and most preferably of at least 25.

According to another embodiment the second calcium carbonate-comprising material is used in form of an aqueous suspension, preferably in form of an aqueous suspension having a solids content of at least 30 wt.-%, based on the total weight of the aqueous suspension preferably of at least 40 wt.-%, even more preferably of at least 45 wt.-% and most preferably of about 50 wt.-%.

According to another embodiment, the dry weight ratio of the first to the second calcium carbonate-comprising material is from 5:95 to 30:70, preferably from 8:92 to 25:75 and most preferably from 10:90 to 20:80.

According to another embodiment, the inventive composition has a pH value from 7 to 13, preferably from 8 to 12 and most preferably from 9 to 11.

According to another embodiment, the inventive composition has a viscosity in the range of 50 to 200 mPa·s.

According to another embodiment the curing system is present in the composition in an amount of at least 1 phr, based on the at least one latex, preferably in an amount from 2 phr to 20 phr, even more preferably from 3 phr to 15 phr and most preferably from 3.5 phr to 10 phr.

According to another embodiment the at least one filler composition is present in the composition in an amount of at least 1 phr, based on the at least one latex, preferably in an amount from 2 phr to 40 phr, even more preferably from 3 phr to 30 phr and most preferably from 4 phr to 25 phr.

According to another embodiment, the total solid content of the composition of step B) is between 5 wt.-% to 50 wt.-%, based on the total weight of the composition of step B), preferably between 10 wt.-% to 30 wt.-% and most preferably about 20 wt.-%.

According to another embodiment, the at least one coagulant solution is an aqueous composition comprising at least one coagulant selected from the group consisting of calcium nitrate, calcium chloride, magnesium nitrate, acetic acid, formic acid, sodium silicofluoride and mixtures thereof, and preferably is calcium nitrate.

Optionally at least one releasing agent is present in the coagulant solution selected from the group consisting of a non-mineral material e.g., composition comprising chlorine, polymer of polyacrylate, polyurethane, starch, preferably chemically modified starch such as corn starch and a metal soap, preferably calcium stearate, and a mineral material, e.g. an insoluble metal carbonate, preferably calcium carbonate or magnesium carbonate, a silicate, preferably talc, kaolin or clay, and preferably calcium carbonate. If the optional releasing agent is a mineral material "powdered" elastomeric films can be provided. If the optional releasing agent is a non-mineral material "powder free" elastomeric films can be provided.

The optional releasing agent may be added to the coagulant solution in step A. Additionally or alternatively, the elastomeric film obtained after step K) and before step L) may be treated with the releasing agent.

For example, the inventive method comprises an additional coating step before step L) and after step K) with a composition comprising starch, preferably chemically modified corn starch or a composition comprising at least one polymer, preferably polyacrylate, polyurethane or a mixture thereof or a composition comprising chlorine.

According to one embodiment, the chlorine is generated in situ in the composition and released in a controlled manner.

According to another embodiment step J) is performed in water and most preferably in deionized water before step K.

According to another embodiment, the inventive method comprises the additional step of cooling the elastomeric film-coated former of step K) to temperatures from 15°C to 30°C, preferably to about 20°C before step L).

According to another embodiment, the film is in the form a glove, a balloon, a condom, a probe cover, a dental dam, a finger cot, a catheter or a film and preferably is a glove.

According to another embodiment, the average thickness of the total elastomeric film is between 0.01 and 6.0 mm, preferably between 0.05 and 0.15 mm.

According to another embodiment, the film is in the form of a glove, wherein the glove has a higher mechanical strength compared to a glove that has been prepared the same way, wherein said glove that has been prepared the same way comprises i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; or ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20,.

According to another embodiment, the filler in the elastomeric film is present in an amount of 1 wt.-% to 40 wt.-%, based on the total weight of the elastomeric film, preferably in an amount of 5 wt.-% to 20 wt.-% and most preferably in an amount of 5 wt.-% to 10 wt.-% based on the total weight of the elastomeric film.

The following terms used throughout the present application shall have the meanings set forth hereinafter:

The term "elastomeric film" according to the present invention refers to a film manufactured from an elastomeric polymer. An "elastomeric polymer" according to the present invention is a polymer providing viscoelasticity (having both viscosity and elasticity) and very weak inter-molecular forces, generally having low Young's modulus and high failure strain compared with other materials. The elastomeric polymer can be prepared from a mixture comprising latex, a curing system and a stabilizer by drying and/or curing. Rubber materials are common elastomeric materials. If the elastomeric film is a glove according to the present invention, it has glass temperature (Tg) values below the ambient temperature of 25 °C.

A "film" in the meaning of the present invention is a sheet or layer of material having an average thickness which is small compared to its length and width. For example, the term "film" may refer to a sheet or layer of material having an average thickness between 0.01 to 6.0 mm, preferably between 0.05 and 0.15 mm. The film may be a mono or multi-layer film. The film may be in any possible form, for example in the form of a glove, a balloon, a condom, a probe cover, a dental dam, a finger cot, a catheter or a film.

A "monolayer" film refers to a film consisting of one layer only. A "multi-layer" film refers to a film consisting of two or more layers such as two to ten layers, which are adjacent to each other.

The term "latex" according to the present invention refers to a dispersion/emulsion of polymer microparticles in an aqueous medium. The latex of the present invention can be a natural latex or a synthetic latex or a mixture thereof. The latex may further comprise an anticoagulant which is also known as preservative.

The term "anticoagulant" according to the present invention refers to a chemical that is used to prevent or reduce the coagulation of the polymer microparticles in the latex. Possible anticoagulants or preservatives are, for example, alkali compounds like ammonia or potassium hydroxide possibly in combination with a bactericide like a mixture of tetramethylthiuram disulfide (TMTD) with zinc oxide (ZnO). Further known anticoagulants are sodium metabisulphite, boric acid, hydroxylamine and sodium pentachloro phenate. The latex of the present invention may further comprise a stabilizer.

The term "stabilizer" according to the present invention refers to a chemical or a mixture of different chemicals that stabilize the latex. Optionally, the stabilizer can be added separately to the inventive compositionin order to stabilize the latex.

The term "curing system" or "vulcanization system" or "crosslinking system" according to the present invention refers to a chemical or a mixture of different chemicals that enable the toughening or hardening of the latex by cross-linking of the polymer chains in the polymer microparticles in the latex. This process is also known as "curing" or "vulcanization" or "crosslinking".

The term "filler composition" in the meaning of the present invention refers to a composition that is added to a composition comprising at least one latex in order to lower the consumption of more expensive materials and to improve material or mechanical properties of the resulting elastomeric film prepared from such a composition.

For the purpose of the present invention, the term "calcium carbonate-comprising material" or "calcium carbonate-comprising filler material" refers to a material that comprises at least 90 wt.-% calcium carbonate, based on the total dry weight of the calcium carbonate-comprising material.

"Ground calcium carbonate" (GCC) or "natural ground calcium carbonate" in the meaning of the present invention is a calcium carbonate obtained from natural sources, such as limestone, marble, or chalk, and processed through a wet and/or dry treatment such as grinding, screening and/or fractionation, for example, by a cyclone or classifier.

"Precipitated calcium carbonate" (PCC) in the meaning of the present invention is a synthesized material, generally obtained by precipitation following a reaction of carbon dioxide and calcium hydroxide (hydrated lime) in an aqueous environment or by precipitation from a calcium and a carbonate source in water. Additionally, precipitated calcium carbonate can also be the product of introducing calcium and carbonate salts, calcium chloride and sodium carbonate for example, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

The term "dry" or "dried" material is understood to be a material having between 0.001 to 0.5 wt.-% of water, based on the total weight of the calcium carbonate-comprising material weight. The % water (equal to "moisture content") is determined gravimetrically. "Drying" in the sense of the present invention means that heating is carried out until the moisture content of the calcium carbonate-comprising material is in the range from 0.001 to 0.5 % by weight, based on the total weight of the calcium carbonate-comprising material weight.

The "particle size" of particulate materials, for example the calcium carbonate-comprising material herein is described by its distribution of particle sizes $d_x$. Therein, the value $d_x$ represents the diameter relative to which x % by weight of the particles have diameters less than $d_x$. This means that, for example, the $d_{20}$ value is the particle size at which 20 wt.-% of all particles are smaller than that particle size. The $d_{50}$ value is thus the weight median particle size, i.e. 50 wt.-% of all grains are bigger and the remaining 50 wt.% are smaller than this particle size. For the purpose of the present invention the particle size is specified as weight median particle size $d_{50}$ unless indicated otherwise. The $d_{98}$ value is the particle size at which 98 wt.-% of all particles are smaller than that particle size. The $d_{98}$ value is also designated as "top cut". Particle sizes were determined by using a Sedigraph™ 5120 instrument of Micromeritics Instrument Corporation. The method and the instrument are known to the skilled person and are commonly used to determine the particle size of fillers and pigments. The measurements were carried out in an aqueous solution of 0.1 wt.-% $Na_4P_2O_7$. The samples were dispersed using a high-speed stirrer and sonicated.

The steepness factor according to the present invention is the proportion of the $d_{30}$ to the $d_{70}$ value multiplied by 100.

For the purpose of the present invention, the term "viscosity" or "Brookfield viscosity" refers to Brookfield viscosity. The Brookfield viscosity is for this purpose measured by a Brookfield DV-III Ultra viscometer at 24°C ± 3°C at 20, 30 or 60 rpm using an appropriate spindle of the Brookfield RV-spindle set and is specified in mPa·s. The value in mPa·s corresponds with the value in centipoise. Once the spindle has been inserted into the sample, the measurement is started with a constant rotating speed of 20 rpm. The reported Brookfield viscosity values are the values displayed 60 seconds after the start of the measurement. Based on his technical knowledge, the skilled person will select a spindle from the Brookfield RV spindle set which is suitable for the viscosity range to be measured. Since it is customary and desirable for dispersions of zinc oxide, sulphur, titatnium dioxide, and mineral fillers to be kept in suspension without undue settling, viscosity of these dispersions are generally kept high by the addition of hydrocolloids such as xanthan gum. For these dispersions the spindle speed chosen is generally 20 rpm, and spindle number 4 yields the necessary results. For latex of natural rubber and synthetic rubber a lower viscosity is desirable. A combination of rotation speed of 20 rpm and spindle 2 is used. Notwithstanding the above, engineers skilled in measuring viscosity will be able to make changes to the speed and spindle number for achieving desirable measurements.

A "suspension" or "slurry" in the meaning of the present invention comprises insoluble solids and a solvent or liquid and optionally further additives, and usually contains large amounts of solids and, thus, is more viscous and can be of higher density than the liquid from which it is formed. An "aqueous suspension" in the meaning of the present invention comprises water as solvent or liquid.

For the purpose of the present invention, the "solids content" of a liquid composition is a measure of the amount of material remaining after all the solvent or water has been evaporated.

A "powder" in the meaning of the present invention is a dry, bulk solid composed of a large number of very fine particles that may flow freely when shaken or tilted.

The term "phr" according to the present invention is the abbreviation for "parts per hundred rubber". The term "rubber" according to the present invention refer to natural rubber as well as synthetic rubber. "Natural rubber" according to the present invention, also called India rubber or caoutchouc, as initially produced, as well as "synthetic rubber" consists of latex that has been dried. By drying and/or curing an elastomeric polymer is obtained. According to the present invention, the value of the phr does not refer to the dried rubber but to the latex.

The "coagulant solution" of the present invention prevents that the elastomeric film sticks to the former (adhesion) after the preparation of the elastomeric film as well as sticks to each other (cohesion).

The term "releasing agent", sometimes also referred to as or "anti-tacking agent" according to the present invention refers to a chemical or a mixture of different chemicals that is used to prevent other materials from bonding to surfaces. Depending on the releasing agent "powdered" or "powder free" elastomeric films are obtained.

The term "mechanical strength" according to the present invention refers to the ability of an elastomeric film to withstand an applied load without failure or plastic deformation. Mechanical strength like modulus, elongation at break, and ultimate tensile strength are known to the skilled person as well as typical instruments which are known as tensometers for measuring these mechanical strengths.

The term "standard conditions" according to the present invention refers to standard ambient temperature and pressure (SATP) which refers to a temperature of 298.15 K (25°C) and an absolute pressure of exactly 100000 Pa (1 bar, 14.5 psi, 0.98692 atm), unless indicated otherwise.

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

According to the present invention, a composition for the preparation of an elastomeric film is provided. The composition comprises a) at least one latex, b) at least one curing system, and c) at least one filler composition, wherein the filler composition consists of a mixture of i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; and ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20, wherein the weight median particle size $d_{50}$ value of the first and the second calcium carbonate-comprising material differs by 0.1 $\mu$m to 1.1 $\mu$m.

The inventors found that it is crucial that the filler composition consists of two different calcium carbonate-comprising materials as claimed in claim 1. More precisely, it has been found by the inventors that improved properties can be obtained if the weight median particle size $d_{50}$ value of the two calcium carbonate-comprising materials is very low, namely is in the range from 0.6 $\mu$m to 2 $\mu$m and in the range from 0.3 $\mu$m to 1 $\mu$m. However, as already set out above, the filler composition has to consist of two different calcium carbonate-comprising materials and, therefore, the weight median particle size $d_{50}$ value of the first and the second calcium carbonate-comprising material cannot be the same but has to differ by 0.1 $\mu$m to 1.1 $\mu$m. Furthermore, both calcium carbonate-comprising materials have to have a high steepness factor which is another measure for the particle size distribution. More precisely, the inventors found that the first calcium carbonate-comprising material has to have a steepness factor of at least 40 and the second calcium carbonate-comprising material has to have a steepness factor of at least 20. By such a combination of different calcium carbonate comprising materials in the filler composition, improved properties of the composition and the resulting elastomeric film or material can be achieved. For example, the inventors found that an elastomeric film prepared from the inventive composition provides very good mechanical properties, especially very good modulus, very good elongation at break, and/or very good tensile strength. Furthermore, the inventors found that the inventive composition as well as the elastomeric film prepared from the inventive composition can be produced in a very simple manner on a large scale and very inexpensively.

In the following, preferred embodiments of the composition according to the present invention for the preparation of an elastomeric film will be discussed in more detail. It is to be understood that these details and embodiments also apply to the use of these compositions as well as to the method for the preparation of an elastomeric film and the elastomeric film itself.

Step a) at least one latex

According to step a) of the present invention, the composition for the preparation of an elastomeric film comprises at least one latex.

The expression "at least one" latex means that one or more, for example, two or three latexes may be present in the composition for the preparation of the elastomeric film. According to a preferred embodiment, only one latex is present in the composition for the preparation of the elastomeric film.

As defined above the term "latex" refers to a dispersion/emulsion of polymer microparticles in an aqueous medium.

The latex of the present invention can be a natural latex which can be obtained from plants. "Natural latex" also known as "natural rubber latex" refers to the white sap that comes from plants, especially trees like the *hevea brasiliensis* tree. The latex is a sticky, milky colloid drawn off by making incisions in the bark and collecting the fluid in vessels in a process called "tapping". This sap can be further refined and compounded to render it more readily processed and to optimize physical properties. Natural latex is known to the skilled person and commercially available and supplied as specified in ASTM D1076 - 15 "Standard Specification for Rubber - Concentrated, Ammonia Preserved, Creamed, and Centrifuged Natural Latex".

The latex of the present invention can also be a synthetic latex which can be produced from monomers which are often synthesized from petroleum. For example, synthetic latexes can be made by polymerizing a monomer such as styrene that has been emulsified with surfactants. Synthetic latex is known to the skilled person and commercially available, for example from Zeon Corporation, Japan under the trade name LX551.

According to one embodiment of the present invention, the at least one latex of a) is a natural latex, a synthetic latex or a mixture thereof and preferably is selected from the group consisting of natural latex, acrylonitrile-butadiene latex, nitrile latex, carboxylated nitrile latex, carboxylated polyacrylonitrile-butadiene latex, gutta-percha latex, butadiene latex, acrylate latex, fluoro latex, styrene-butadiene latex, polystyrene-butadiene latex, styrene-isoprene-butadiene latex, synthetic isoprene latex, polyisoprene latex, ethylene-propylene latex, ethylene-propylene-diene latex, butyl latex, ethylene-vinyl acetate latex, ethylene-methyl acrylate latex, epoxide latex, polynorbornene latex, polyalkenylenes, silicone latex, polyurethane latex, thiokol latex, halobutyl latex, chloropolyethylenes, chlorosulfonyl polyethylenes, polychloroprene latex, polyphosphazenes and mixtures thereof and most preferably is acrylonitrile-butadiene latex and/or carboxylated polyacrylonitrile-butadiene latex.

According to one embodiment of the present invention, the latex consists only of natural latex. According to another embodiment of the present invention, the latex consists only of synthetic latex. Alternatively, the latex is a mixture of a natural latex and a synthetic latex wherein the ratio of natural latex: synthetic latex is from 10:90 to 90:10, preferably from 20:80 to 80:20 and more preferably from 30:70 to 70:30. For example, the latex comprises a mixture of a natural latex and a synthetic latex wherein the ratio of natural latex:synthetic latex is 50:50

The latex may further comprise an anticoagulant which is also known as preservative. The term "anticoagulant" according to the present invention refers to a chemical that is used to prevent or reduce the coagulation of the polymer microparticles in the latex. Possible anticoagulants or preservatives are, for example, alkali compounds like ammonia, sodium or potassium hydroxide possibly in combination with a bactericide like a mixture of tetramethylthiuram disulfide (TMTD) with zinc oxide (ZnO). Further known anticoagulants are sodium metabisulphite, boric acid, hydroxylamine and sodium pentachloro phenate. The anticoagulant may be present in the at least one latex in an amount of 0.01 to 10 wt.-%, preferably in an amount of 0.05 to 2 wt.-%, and most preferably in an amount of 0.1 wt.-% to 0.5 wt.-%, based on the total weight of the at least one latex. Optionally, a medium chain fatty acid for example lauric acid in the form of an alkali soap is added to confer further mechanical stability.

The latex of the present invention may further comprise a stabilizer. The term "stabilizer" according to the present invention refers to a chemical or a mixture of different chemicals that stabilize the latex. Optionally, the stabilizer can be added separately to the inventive composition in order to stabilize the latex.

The latex may comprise further compounds like antioxidants, antiozonants, plasticizers, heat sensitizers, pigments, pH control agents or emulsifiers, since the ageing of latex products is affected by a large number of interacting factors, e.g. exposure to oxygen, heat, light and ozone. Such compounds included in latex and latex products reduce or prevent the rate of polymer's degradation. The effectiveness of such compounds in latex depends not only on the chemical structure but also on its particle size and surface area.

The antioxidant used in the present invention may be any antioxidant known from one skill in the art. For example, it may be selected from the group comprising butylated hindered phenol, styrenated hindered phenol, zinc mercaptobenzimidazole and mixtures thereof.

The antiozonant used in the present invention may be any antiozonant known from one in the art. For example, it may be selected from the group comprising paraffin wax, microcrystalline wax, polyethylene wax and/or mixtures thereof.

The plasticizer used in the present invention may be any plasticizer known from one skill in the art. For example, it may be any selected from the group comprising a medium viscosity index napthenic oil, a paraffinic process oil and/or mixture thereof.

The heat sensitizer used in the present invention may be any heat sensitizer known from one skill in the art. For example, it may be an organopolysiloxane, a polyvinyl methyl ether and/or mixture thereof.

The pigment used in the present invention may be any pigment known from one skill in the art. For example, it may be an aqueous based colour pigment, for example, a black pigment, e.g. carbon black, or a white pigment, e.g. titanium dioxide or barium sulphate. Such pigments may be derived synthetically or mined and post treated, for example by calcination, dehydration and thermal cracking.

The pH control agent used in the present invention may be any pH control agent known from one skill in the art. For example, it may be ammonia hydroxide, potassium hydroxide, sodium hydroxide and/or mixture thereof.

The emulsifier used in the present invention may be any emulsifier known to the skilled person and commercially available.

According to one embodiment of the present invention, the at least one latex may have a solids content from 20 to 70 wt.-%, based on the total weight of the at least one latex, preferably from 30 to 60 wt.-%, and most preferably from 40 to 50 wt.-%. For example the at least one latex may have a solids content of about 45 wt.-%, based on the total weight of the at least one latex.

According to another embodiment of the present invention, the at least one latex may have a pH value from 7.0 to 13.0, preferably from 8 to 11, and most preferably from 9.0 to 10.5.

According to another embodiment of the present invention, the at least one latex may have a viscosity in the range of 20 to 400 mPa·s, preferably in the range of 30 to 250 mPa·s and most preferably in the range of 40 to 110 mPa·s.

According to another embodiment of the present invention, the at least one latex may have a surface tension in the range of 20 to 70 mN/m, preferably in the range of 25 to 50 mN/m and most preferably in the range of 29 to 36 mN/m. The surface tension is a measure for the elastic tendency of a fluid surface. The surface tension according to the present invention is measured by the ring method according to DIN ISO 1409:2008-11.

According to a preferred embodiment of the present invention, the at least one latex is a synthetic latex and, preferably is a carboxylated butadiene-acrylonitrile copolymer have a solids content from 40 to 50 wt.-%, based on the total weight of the at least one latex, have a pH value from about 9.0 to 10.5, a viscosity in the range of 40 to 110 mPa·s and a surface tension in the range of 29 to 36 mN/m.

Step b) at least one curing system

According to step b) of the present invention, the composition for the preparation of an elastomeric film comprises at least one curing system.

The expression "at least one" curing system means that one or more, for example, two or three curing systems may be present in the composition for the preparation of the elastomeric film. According to a preferred embodiment, only one curing system is present in the composition for the preparation of the elastomeric film.

The "curing system" enables the increase in elasticity of the polymer chain, reduces permanent deformation of the polymer chain through cold flow and/or under tensile, or torsional stress deformation. A known curing system is sulphur which has been used for nearly 200 years but also other curing systems like peroxide curing systems, metal oxide and peroxide curing systems, acetoxysilane curing systems or urethane crosslinking systems are well known to the skilled person and commercially available. The choice of the curing system depends on the at least one latex, the further compounds in the composition as well as the intended use of the composition and the elastomeric film. The skilled person knows how to determine the right curing system.

According to one embodiment of the present invention, the curing system is a "sulphur curing system". A "sulphur curing system" according to the present invention refers to a chemical or a mixture of different chemicals that enable cross-linking of the polymer chains in the polymer microparticles in the latex, wherein the chemical is or the system comprises sulphur and/or a sulphur-containing chemical. The sulphur curing system may comprise further chemicals, for example potassium hydroxide (KOH), which are not part of the curing system.

According to a preferred embodiment of the present invention, the curing system is an "accelerated sulphur curing system". An "accelerated sulphur curing system" according to the present invention refers to a sulphur curing system that additionally comprises at least on accelerator. The accelerator may speed up the process of the curing/vulcanization/crosslinking. Accelerators that can be used in sulphur curing systems are known to the skilled person and are commercially available. Examples of such accelerators are zinc oxide (ZnO), zinc diethyl dithiocarbamate (ZDEC) and zinc dibutyl dithiocarbamate (ZDBC). Accelerated sulphur curing systems are known to the skilled person and are commercially available, for example, from Lanxess, Germany under the trade name of Vulkacit.

According to an exemplified embodiment of the present invention, the curing system is an accelerated sulphur curing system consisting of sulphur, zinc dibutyl dithiocarbamate and zinc oxide. According to another exemplified embodiment of the present invention, the curing system is an accelerated sulphur curing system consisting of sulphur, sodium salt of naphthalene sulphonic, zinc dibutyl dithiocarbamate, zinc diethyl dithiocarbamate, titanium dioxide and zinc oxide.

According to one embodiment of the present invention, the curing system is present in the composition in an amount of at least 1 phr, based on the at least one latex, preferably in an amount from 2 phr to 15 phr, even more preferably from 3 phr to 10 phr and most preferably from 3.5 phr to 5 phr.

Optionally at least one stabilizer

As already set out above the inventive composition for the preparation of an elastomeric film optionally comprises at least one stabilizer.

The expression "at least one" stabilizer means that one or more, for example, two or three stabilizers may be present in the composition for the preparation of the elastomeric film. According to a preferred embodiment only one stabilizer is present in the composition for the preparation of the elastomeric film.

The stabilizer is a chemical or a mixture of different chemicals that stabilize the inventive composition and, therefore, prevents or reduces coagulation or separation of the inventive composition. Stabilizers are well known to the skilled person and are commercially available, for example, from Dow under the trade name Dowfax and from Huntsman under the trade name Teric.

Various types of stabilizers have been used in the prior art such as protective colloids, exemplified by polymethacrylates, gelatin, pectinates, and caseinates, which might be used in combination with emulsifiers to effect micelle concentration or to prevent premature coagulation by forming a thin film at the interface between the polymer droplets and the water.

Other known stabilizers are soaps like anionic soaps such as alkali salts of palmitic acid, stearic acid and oleic acid, nonionic soaps, for example, reaction products of long-chain alcohols with ethylene oxide, or cationic soaps such as dodecylammonium chloride and hexadecylpyrridinium chloride.

Other known stabilizers are high molecular weight alcohols, polyhydroxy compounds or the sodium salt of a condensed naphthalene sulfonic acid. These are, for example, available from Vanderbilt under the trade name Darvan or from BASF under the trade name Tamol.

According to one embodiment of the present invention, the at least one stabilizer is selected from the group consisting of triethanol amine oleate, potassium oleate, fatty acid alcohol polyglycol ether, casein, sodium or ammonium lauryl sulphate, sodium dodecyl sulfonate, alkyl aryl sulphonates, non-ionic surfactant and mixtures thereof.

According to one embodiment of the present invention, the stabilizer is present in the composition in an amount of at least 0.01 phr, based on the at least one latex, preferably in an amount from 0.05 phr to 5 phr, even more preferably from 0.1 phr to 1 phr and most preferably from 0.2 phr to 0.7 phr.

Step c) at least one filler composition

According to step c) of the present invention, the composition for the preparation of an elastomeric film comprises at least one filler composition.

The filler composition consists of a mixture of

i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; and
ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20,

wherein the weight median particle size $d_{50}$ value of the first and the second calcium carbonate-comprising material differs by 0.1 $\mu$m to 1.1 $\mu$m.

The expression "at least one" filler composition means that one or more, for example, two or three filler composition may be present in the composition for the preparation of the elastomeric film. According to a preferred embodiment only one filler composition is present in the composition for the preparation of the elastomeric film.

As already set out above the filler composition consists of a mixture of i) a first calcium carbonate-comprising material and ii) a second calcium carbonate-comprising material. According to a preferred embodiment of the present invention, the first calcium carbonate-comprising material and/or the second calcium carbonate-comprising material is/are selected from the group consisting of ground calcium carbonate (GCC), preferably marble, limestone, and/or chalk, precipitated calcium carbonate (PCC), preferably vaterite, calcite and/or aragonite, and mixtures thereof, more preferably the calcium carbonate-comprising material is ground calcium carbonate.

Natural or ground calcium carbonate (GCC) is understood to be manufactured from a naturally occurring form of calcium carbonate, mined from sedimentary rocks such as limestone or chalk, or from metamorphic marble rocks, eggshells or seashells. Calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Ground calcium carbonate is almost exclusively of the calcitic polymorph, which is said to be trigonal-rhombohedral and represents the most stable form of the calcium carbonate polymorphs. The term "source" of the calcium carbonate in the meaning of the present application refers to the naturally occurring mineral material from which the calcium carbonate is obtained. The source of the calcium carbonate may comprise further naturally occurring components such as magnesium carbonate, alumino silicate etc.

In general, the grinding of natural ground calcium carbonate may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate-comprising mineral material comprises a wet ground calcium carbonate-comprising mineral material, the grinding step may be performed under conditions such that autogenous grinding takes place and/or by horizontal ball milling, and/or other such processes known to the skilled man. The wet processed ground calcium carbonate-comprising mineral material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

According to one embodiment of the present invention, the source of natural or ground calcium carbonate (GCC) is selected from marble, chalk, limestone, or mixtures thereof. Preferably, the source of ground calcium carbonate is marble. According to one embodiment of the present invention, the GCC is obtained by dry grinding. According to another embodiment of the present invention, the GCC is obtained by wet grinding and subsequent drying.

According to one embodiment of the present invention, the calcium carbonate comprises one type of ground calcium carbonate. According to another embodiment of the present invention, the calcium carbonate comprises a mixture of two or more types of ground calcium carbonates selected from different sources of grinding comprising of dry (anhydrous) or wet grinding.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation by combining calcium and carbonate ions, for example $CaCl_2$ and $Na_2CO_3$, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the precipitated calcium carbonate is precipitated calcium carbonate, preferably comprising aragonitic, vateritic or calcitic mineralogical crystal forms or mixtures thereof.

According to one embodiment of the present invention, the calcium carbonate comprises one type of precipitated calcium carbonate. According to another embodiment of the present invention, the calcium carbonate comprises a mixture of two or more precipitated calcium carbonates selected from different crystalline forms and different polymorphs of precipitated calcium carbonate. For example, the at least one precipitated calcium carbonate may comprise one PCC selected from S-PCC and one PCC selected from R-PCC.

According to a preferred embodiment of the present invention, the calcium carbonate-comprising material is ground calcium carbonate, preferably dry ground calcium carbonate. According to another preferred embodiment, the calcium carbonate-comprising material is marble.

The first calcium carbonate-comprising material has a calcium carbonate content of at least 90 wt.-%, based on the total weight of the first calcium carbonate-comprising material. According to one embodiment of the present invention, the first calcium carbonate-comprising material has a calcium carbonate content of at least 93 wt.-%, based on the total dry weight of the first calcium carbonate-comprising material, preferably of at least 95 wt.-%, even more preferably of at least 97 wt.-% and most preferably of about 98 wt.-%.

The first calcium carbonate-comprising filler material is preferably in the form of a particulate material, and has a weight median particle size $d_{50}$ value in the range from 0.6 $\mu$m to 2 $\mu$m. According to one embodiment of the present invention, the first calcium carbonate-comprising filler material has a weight median particle size $d_{50}$ value in the range from 0.6 $\mu$m to 2 $\mu$m, preferably in the range from 0.7 $\mu$m to 1.5 $\mu$m, even more preferably in the range from 0.8 $\mu$m to 1.0 $\mu$m and most preferably of about 0.9 $\mu$m.

According to another embodiment of the present invention, the first calcium carbonate-comprising material has a top cut ($d_{98}$) of $\leq$ 20 $\mu$m, preferably of $\leq$ 10 $\mu$m, more preferably of $\leq$ 8 $\mu$m, even more preferably of $\leq$ 5 $\mu$m and most preferably of about 4 $\mu$m.

According to another embodiment of the present invention, the first calcium carbonate-comprising material has a residue on a 45 $\mu$m sieve of $\leq$ 1 wt.-% based on the total dry weight of the first calcium carbonate-comprising material, preferably of $\leq$ 0.5 wt.-%, even more preferably of $\leq$ 0.1 wt.-%, even more preferably of $\leq$ 0.05 wt.-% and most preferably of about 0.01 wt.-%.

According to another embodiment of the present invention, the amount of particles < 2 $\mu$m of the first calcium carbonate-comprising material is $\geq$ 80 wt.-%, based on the total dry weight of the first calcium carbonate-comprising material, preferably $\geq$ 83 wt.-%, even more preferably $\geq$ 86 wt.-%, and most preferably is about 90 wt.-%.

Depending on the first calcium carbonate-comprising material, the first calcium carbonate-comprising material has a residual total moisture content of from 0.01 wt.-% to 1.5 wt.-%, based on the total dry weight of the first calcium carbonate-comprising material, preferably from 0.1 wt.-% to 1.0 wt.-%, more preferably from 0.2 wt.-% to 0.8 wt.-%, even more preferably from 0.5 wt.-% to 0.7 wt.-% and most preferably of about 0.6 wt.-%.

Depending on the first calcium carbonate-comprising material, the first calcium carbonate-comprising material has a HCl insoluble content of $\leq$ 10 wt.-% based on the total dry weight of the first calcium carbonate-comprising material, preferably of $\leq$ 7 wt.-%, even more preferably of $\leq$ 5 wt.-%, even more preferably of $\leq$ 3 wt.-% and most preferably of about 2 wt.-%. For the purpose of the present application, "HCl insoluble" materials are defined as materials which, when 100 g of said material is mixed with 100 g concentrated HCl (38% HCl) at room temperature (298.15 K, 25°C) and filtered on a filter having a 0.2 $\square$m pore size at 20°C to recover the filtrate, provide less than or equal to 0.1 g of recovered solid material following evaporation at 95 to 100°C of 100 g of said filtrate at ambient pressure (1 bar, 100000 Pa).

Another measure for the particle size distribution (psd) of particulate material is the "steepness factor." The steepness factor is derived from the slope of a psd curve, where the particle diameter is plotted on the x-axis against a cumulative mass percentage of particles on the y-axis. A wide particle distribution has a relatively lower steepness factor, whereas a narrow particle size distribution gives rise to a relatively higher steepness factor.

The steepness factor according to the present invention is the proportion of the $d_{30}$ to the $d_{70}$ value multiplied by 100. i.e., the ratio of the particle size at a cumulative mass of less than 30% of the particles ($d_{30}$), to the particle size at a cumulative mass of less than 70% of the particles ($d_{70}$), as determined by a Sedigraph™ 5120, multiplied by 100. As the $d_{30}$ and $d_{70}$ values approach each other, the steepness factor increases.

$$[\text{steepness factor}] = (d_{30} / d_{70}) \times 100$$

The first calcium carbonate-comprising material has a steepness factor of at least 40. According to one embodiment the first calcium carbonate-comprising material has a steepness factor of at least 45, preferably of at least 50 and most preferably of at least 60, for example a steepness factor of about 66.

According to one embodiment of the present invention, the first calcium carbonate-comprising material is ground calcium carbonate, preferably dry ground calcium carbonate. According to another preferred embodiment, the first calcium carbonate-comprising material is marble.

According to one embodiment of the present invention, the first calcium carbonate-comprising material has a weight median particle size $d_{50}$ value in the range from 0.6 $\mu$m to 2 $\mu$m, and a top cut ($d_{98}$) of $\leq$ 20 $\mu$m, and a residue on a 45 $\mu$m sieve of $\leq$ 1 wt.-% based on the total dry weight of the first calcium carbonate-comprising material, and the amount of particles < 2 $\mu$m is $\geq$ 80 wt.-%, based on the total dry weight of the first calcium carbonate-comprising material, and a residual total moisture content of from 0.01 wt.-% to 1.5 wt.-%, based on the total dry weight of the first calcium carbonate-comprising material, and a calcium carbonate content of at least 93 wt.-%, based on the total dry weight of the first calcium carbonate-comprising material, and a HCl insoluble content of $\leq$ 10 wt.-% based on the total dry weight of the first calcium carbonate-comprising material, and a steepness factor of at least 40, preferably of at least 45, more preferably of at least 50 and most preferably of at least 60.

According to a preferred embodiment of the present invention, the first calcium carbonate-comprising material is a ground calcium carbonate and has a weight median particle size $d_{50}$ value in the range from 0.8 $\mu$m to 1.0 $\mu$m, and a top cut ($d_{98}$) of $\leq$ 5 $\mu$m, and a residue on a 45 $\mu$m sieve of $\leq$ 0.05 wt.-% based on the total dry weight of the first calcium carbonate-comprising material, and the amount of particles < 2 $\mu$m is $\geq$ 86 wt.-%, based on the total dry weight of the first calcium carbonate-comprising material, and a residual total moisture content of from 0.5 wt.-% to 0.7 wt.-%, based on the total dry weight of the first calcium carbonate-comprising material, and a calcium carbonate content of at least 97 wt.-%, based on the total dry weight of the first calcium carbonate-comprising material, and a HCl insoluble content of $\leq$ 3 wt.-% based on the total dry weight of the first calcium carbonate-comprising material, and a steepness factor of at least 60.

According to an exemplified embodiment of the present invention, the first calcium carbonate-comprising material is a ground calcium carbonate obtained from marble and has a weight median particle size $d_{50}$ value of about 0.9 $\mu$m, and a top cut ($d_{98}$) of about 4 $\mu$m, and a residue on a 45 $\mu$m sieve of about 0.01 wt.-% based on the total dry weight of the first calcium carbonate-comprising material, and the amount of particles < 2 $\mu$m is about 90 wt.-%, based on the total dry weight of the first calcium carbonate-comprising material, and a residual total moisture content of about 0.6 wt.-%, based on the total dry weight of the first calcium carbonate-comprising material, and a calcium carbonate content of about 98 wt.-%, based on the total dry weight of the first calcium carbonate-comprising material, and a HCl insoluble content of about 2 wt.-% based on the total dry weight of the first calcium carbonate-comprising material, and a steepness factor of about 66. Such materials are known to the skilled person and are commercially available.

The first calcium carbonate-comprising material is solid under standard ambient temperature and pressure (SATP) which refers to a temperature of 298.15 K (25°C) and an absolute pressure of exactly 100000 Pa (1 bar, 14.5 psi, 0.98692 atm) and may be used in the form of a powder, granules, flakes etc. According to a preferred embodiment of the present invention, the first calcium carbonate-comprising material is used in form of a powder.

The second calcium carbonate-comprising material has a calcium carbonate content of at least 90 wt.-%, based on the total weight of the second calcium carbonate-comprising material. According to one embodiment of the present invention, the second calcium carbonate-comprising material has a calcium carbonate content of at least 93 wt.-%, based on the total dry weight of the first calcium carbonate-comprising material, preferably of at least 95 wt.-%, even more preferably of at least 97 wt.-% and most preferably of about 97.5 wt.-%.

The second calcium carbonate-comprising filler material is preferably in the form of a particulate material, and has a weight median particle size $d_{50}$ value in the range from 0.3 $\mu$m to 1 $\mu$m. According to one embodiment of the present invention, the second calcium carbonate-comprising filler material has a weight median particle size $d_{50}$ value in the range from 0.4 $\mu$m to 0.9 $\mu$m, preferably in the range from 0.5 $\mu$m to 0.8 $\mu$m, even more preferably in the range from 0.5 $\mu$m to 0.7 $\mu$m and most preferably of about 0.6 $\mu$m.

According to another embodiment of the present invention, the second calcium carbonate-comprising material has a top cut ($d_{98}$) of $\leq$ 20 $\mu$m, preferably of $\leq$ 10 $\mu$m, more preferably of $\leq$ 8 $\mu$m, even more preferably of $\leq$ 5 $\mu$m and most preferably of about 4 $\mu$m.

According to another embodiment of the present invention, the second calcium carbonate-comprising material has a residue on a 45 $\mu$m sieve of $\leq$ 1 wt.-%, based on the total dry weight of the second calcium carbonate-comprising material, preferably of $\leq$ 0.5 wt.-%, even more preferably of $\leq$ 0.1 wt.-%, even more preferably of $\leq$ 0.05 wt.-% and most preferably of about 0.01 wt.-%.

According to another embodiment of the present invention, the amount of particles < 1 $\mu$m of the second calcium carbonate-comprising material the is $\geq$ 70 wt.-%, based on the total dry weight of the second calcium carbonate-comprising material, preferably $\geq$ 73 wt.-%, even more preferably $\geq$ 76 wt.-%, and most preferably is about 80 wt.-%.

Depending on the second calcium carbonate-comprising material, the second calcium carbonate-comprising material has a HCl insoluble content of $\leq$ 10 wt.-% based on the total dry weight of the second calcium carbonate-comprising material, preferably of $\leq 7$ wt.-%, even more preferably of $\leq 5$ wt.-%, even more preferably of $\leq 3$ wt.-%, even more preferably of $\leq 2$ wt.-% and most preferably of about 0.9 wt.-%.

The second calcium carbonate-comprising material has a steepness factor of at least 20. According to one embodiment, the second calcium carbonate-comprising material has a steepness factor of at least 22, preferably of at least 24 and most preferably of at least 25, for example, a steepness factor of about 26.

According to one embodiment of the present invention, the second calcium carbonate-comprising material is ground calcium carbonate, preferably wet ground calcium carbonate. According to another preferred embodiment, the second calcium carbonate-comprising material is marble.

According to one embodiment of the present invention, the second calcium carbonate-comprising material has a weight median particle size $d_{50}$ value in the range from 0.3 $\mu$m to 1 $\mu$m, and a top cut ($d_{98}$) of $\leq 20$ $\mu$m, and a residue on a 45 $\mu$m sieve of $\leq 1$ wt.-% based on the total dry weight of the second calcium carbonate-comprising material, and the amount of particles < 1 $\mu$m is $\geq 70$ wt.-%, based on the total dry weight of the second calcium carbonate-comprising material, and a calcium carbonate content of at least 93 wt.-%, based on the total dry weight of the second calcium carbonate-comprising material, and a HCl insoluble content of $\leq 10$ wt.-% based on the total dry weight of the second calcium carbonate-comprising material, and a steepness factor of at least 20, preferably of at least 22, more preferably of at least 24 and most preferably of at least 25.

According to a preferred embodiment of the present invention, the second calcium carbonate-comprising material is a ground calcium carbonate and has a weight median particle size $d_{50}$ value in the range from 0.5 $\mu$m to 0.7 $\mu$m, and a top cut ($d_{98}$) of $\leq 5$ $\mu$m, and a residue on a 45 $\mu$m sieve of $\leq 0.05$ wt.-% based on the total dry weight of the second calcium carbonate-comprising material, and the amount of particles < 1 $\mu$m is $\geq 76$ wt.-%, based on the total dry weight of the second calcium carbonate-comprising material, and a calcium carbonate content of at least 97 wt.-%, based on the total dry weight of the second calcium carbonate-comprising material, and a HCl insoluble content of $\leq 2$ wt.-% based on the total dry weight of the second calcium carbonate-comprising material, and a steepness factor of at least 25.

According to an exemplified embodiment of the present invention, the second calcium carbonate-comprising material is a ground calcium carbonate obtained from marble and has a weight median particle size $d_{50}$ value of about 0.6 $\mu$m, and a top cut ($d_{98}$) of about 4 $\mu$m, and a residue on a 45 $\mu$m sieve of about 0.01 wt.-% based on the total dry weight of the second calcium carbonate-comprising material, and the amount of particles < 1 $\mu$m is about 80 wt.-%, based on the total dry weight of the second calcium carbonate-comprising material, and a calcium carbonate content of about 97.5 wt.-%, based on the total dry weight of the second calcium carbonate-comprising material, and a HCl insoluble content of about 0.9 wt.-% based on the total dry weight of the second calcium carbonate-comprising material, and a steepness factor of about 25. Such materials are known to the skilled person and are commercially available.

The second calcium carbonate-comprising material is solid under standard ambient temperature and pressure (SATP) which refers to a temperature of 298.15 K (25°C) and an absolute pressure of exactly 100000 Pa (1 bar, 14.5 psi, 0.98692 atm) and may be used in the form of a slurry. According to a preferred embodiment of the present invention, the second calcium carbonate-comprising material is used in form of an aqueous suspension, preferably in form of an aqueous suspension having a solids content of at least 30 wt.-%, based on the total weight of the aqueous suspension, preferably of at least 40 wt.-%, even more preferably of at least 45 wt.-% and most preferably of about 50 wt.-%.

As already set out above the first calcium carbonate-comprising material is preferably in the form of a particulate material, and has a weight median particle size $d_{50}$ value in the range from 0.6 $\mu$m to 2 $\mu$m and the second calcium carbonate-comprising material is preferably in the form of a particulate material, and has a weight median particle size $d_{50}$ value in the range from 0.3 $\mu$m to 1 $\mu$m, with the provision that the weight median particle size $d_{50}$ value of the first and the second calcium carbonate-comprising material differs by 0.1 $\mu$m to 1.1 $\mu$m. This means the particle size distribution of the first and the second calcium carbonate-comprising material is different and can be detected, for example, by using a Sedigraph™ 5120 instrument of Micromeritics Instrument Corporation. The method and the instrument are known to the skilled person and are commonly used to determine the particle size of fillers and pigments. The measurements were carried out in an aqueous solution of 0.1 wt.-% $Na_4P_2O_7$. The samples were dispersed using a high-speed stirrer and sonicated.

According to a preferred embodiment of the present invention, the first calcium carbonate-comprising filler material has a weight median particle size $d_{50}$ value in the range from 0.6 $\mu$m to 2 $\mu$m, preferably in the range from 0.7 $\mu$m to 1.5 $\mu$m, even more preferably in the range from 0.8 $\mu$m to 1.0 $\mu$m and most preferably of about 0.9 $\mu$m and the second calcium carbonate-comprising filler material has a weight median particle size $d_{50}$ value in the range from 0.4 $\mu$m to 0.9 $\mu$m, preferably in the range from 0.5 $\mu$m to 0.8 $\mu$m, even more preferably in the range from 0.5 $\mu$m to 0.7 $\mu$m and most preferably of about 0.6 $\mu$m with the provision that the weight median particle size $d_{50}$ value of the first and the second calcium carbonate-comprising material differs by 0.1 $\mu$m to 1.1 $\mu$m, preferably by 0.2 $\mu$m to 0.8 $\mu$m, even more preferably by 0.3 $\mu$m to 0.5 $\mu$m and most preferably of about 0.3 $\mu$m.

The first and the second calcium carbonate-comprising material can be used in any dry weight ratio. The term "dry weight ratio" refers to the dry weight of the first calcium carbonate-comprising material in relation to the dry weight of the second calcium carbonate-comprising material. According to a preferred embodiment of the present invention, the dry weight ratio of the first to the second calcium carbonate-comprising material is from 5:95 to 30:70, preferably from 8:92 to 25:75 and most preferably from 10:90 to 20:80.

According to one embodiment of the present invention, the at least one filler composition is present in the composition in an amount of at least 1 phr, based on the at least one latex, preferably in an amount from 2 phr to 40 phr, even more preferably from 3 phr to 30 phr and most preferably from 4 phr to 25 phr.

The inventive composition and use of the inventive composition

As already set out above, the inventive composition for the preparation of an elastomeric film comprises:

a) at least one latex,
b) at least one curing system,
c) at least one filler composition, wherein the filler composition consists of a mixture of

i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; and
ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20, wherein the weight median particle size $d_{50}$ value of the first and the second calcium carbonate-comprising material differs by 0.1 $\mu$m to 1.1 $\mu$m.

The inventive composition may comprise further additives and compounds, such as pH-adjusting agents, solvents (water, organic solvent(s) and mixtures thereof), viscosity enhancers, biocides, stabilizers,etc.

According to a preferred embodiment of the present invention, the inventive composition for the preparation of an elastomeric film consist of:

a) at least one latex,
b) at least one curing system,
c)) at least one filler composition, wherein the filler composition consists of a mixture of

i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; and
ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20, wherein the weight median particle size $d_{50}$ value of the first and the second calcium carbonate-comprising material differs by 0.1 $\mu$m to 1.1 $\mu$m.

According to one embodiment of the present invention, the inventive composition may have a total solids content from 5 to 50 wt.-%, based on the total weight of the composition, preferably from 10 to 30 wt.-%, and most preferably of about 20 wt.-%.

According to another embodiment of the present invention, the inventive composition may have a pH value from 7.0 to 13.0, preferably from 8 to 12, and most preferably from 9 to 11. For example the at least one latex may have a pH value of about 10.0.

According to another embodiment of the present invention, the inventive composition may have a viscosity in the range of 20 to 400 mPa·s, preferably in the range of 50 to 200 mPa·s.

According to another embodiment of the present invention, the inventive composition may have a surface tension in the range of 20 to 70 mN/m, preferably in the range of 25 to 50 mN/m and most preferably in the range of 29 to 36 mN/m.

The inventive composition can be used for the preparation of an elastomeric film and preferably for the preparation of a glove. More precisely, according to the present invention the use of a composition for the preparation of an elastomeric film and preferably for the preparation of a glove is provided, wherein the composition comprises:

a) at least one latex,

b) at least one curing system,
c) at least one filler composition, wherein the filler composition consists of a mixture of

i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; and
ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20,
wherein the weight median particle size $d_{50}$ value of the first and the second calcium carbonate-comprising material differs by 0.1 $\mu$m to 1.1 $\mu$m.

The inventors surprisingly found that the inventive composition provides several advantages. For example, the inventors found that an elastomeric film prepared from the inventive composition provides very good mechanical properties, especially very good modulus, very good elongation at break, very good ultimate tensile strength. Furthermore, the inventors found that the inventive composition as well as the elastomeric film prepared from the inventive composition can be produced in a very simple manner on a large scale and very inexpensively.

Method for preparing an elastomeric film

According to the present invention a method for preparing an elastomeric film is provided comprising the steps of

A) providing a coagulant solution and
B) providing at least one composition for the preparation of an elastomeric film according to the present invention and
C) providing at least one former,
D) dipping the former of step C) in the solution of step A),
E) drying or partially drying the coagulant-dipped former of step D),
F) dipping the coagulant-coated former of step E) into the composition of step B) to produce a layer of the composition of step B) on the coagulant-coated former,
G) drying the layer of the composition formed on the coagulant-coated former,
H) optionally dipping the former obtained in step G) into the composition of step B) to produce a further layer of the composition of step B) and drying said further layer,
I) optionally repeating step H),
J) leaching the former obtained in step G) and/or step H) and/or step I) in an aqueous solution,
K) heating the former obtained in step J) to produce the total elastomeric film,
L) stripping the total elastomeric film from the former.

In step A) a coagulant solution is provided. The coagulant solution of the present invention prevents that the elastomeric film sticks to the former after the preparation of the elastomeric film. Coagulant solutions are known to the skilled person and are commercially available, for example from Yara Global under the trade name DipCal.
According to at least one embodiment of the present invention the at least one coagulant solution is an aqueous composition comprising at least one coagulant selected from the group consisting of calcium nitrate, calcium chloride, magnesium nitrate, acetic acid, formic acid, sodium silicofluoride and mixtures thereof, and preferably is calcium nitrate and at least one releasing agent selected from the group consisting of a polymer of polyacrylate, polyurethane, an insoluble metal carbonate, preferably calcium carbonate or magnesium carbonate, a silicate, preferably talc, kaolin or clay, chemically modified starch and a metal soap, and preferably is calcium carbonate.
According to a preferred embodiment of the present invention, the amount of coagulant in the coagulant solution is from 5 to 30 wt.-%, based on the total weight of the coagulant solution, and preferably is from 8 to 25 wt.-%.
For example, the coagulant solution is an aqueous composition comprising water and calcium nitrate. According to a preferred embodiment of the present invention, the amount of calcium nitrate in the coagulant solution is from 5 to 30 wt.-%, based on the total weight of the coagulant solution, preferably is about 8 to 25 wt.-% and most preferably is about 20 wt.-%.
According to one embodiment of the present invention, the coagulant additionally comprises a wetting agent. Wetting agents are known to the skilled person and are commercially available. For example, the wetting agent can be a non-ionic surfactant with a hydrophilic lyophilic balance (HLB) value of between 10 to 16, preferably 12 to 14. The skilled person knows how to do such a calculation. Such wetting agents are, for example, available from Huntsman under the trade name Teric.
In step B) a composition according to the present invention is provided as already described in detail above.

According to one embodiment the total solid content of the composition of step B) is between 5 wt.-% to 50 wt.-%, based on the total weight of the composition of step B), preferably between 10 wt.-% to 30 wt.-% and most preferably about 20 wt.-%.

In step C) at least one former is provided. Formers are known to the skilled person and are commercially available, for example, from CeramTec, Malaysia. The formers may be in any suitable form for producing the desired elastomeric article. For example, if a glove should be prepared from the inventive composition the former is in the form of a hand. The former may be of any material that is known to the skilled person and that is suitable for the above method, for example, from porcelain, steel, plastic, glass etc. In a preferred embodiment the former is made of porcelain.

According to one embodiment of the present invention, the at least one former of step C) is heated at temperatures between 40°C to 100°C before step D), preferably at temperatures between 50°C to 90°C, more preferably between 60°C to 80°C and most preferably at about 70°C.

In step D) the former of step B) is dipped in the solution of step A). The dipping step D) is performed in order to obtain a former with a coagulant coating on the former (coagulant-dipped former) and, therefore, the coagulant solution does not fully drain off the former after pulling out the former of the coagulant solution but remains as a thin film on the former. The coagulant solution on the former prevents that the inventive latex deposits through controlled coagulation as an elastomeric film after subsequent drying.

According to one embodiment of the present invention, the dipping step D) is preferably performed at temperature between 50°C and 60°C.

According to another embodiment of the present invention dipping step D) is carried out for at least 1 s, e.g. for at least 2 s, 4 s, 6 s, or 8 s. However, also longer dipping time for example 15 s, 30 s or 1 min are possible. It is a known practice among those known in the art of latex dipping that thickness increase is diminished with time. Further thickness increment can be achieved by double or triple dipping.

Dipping machines for performing step D) are known to the skilled person and commercially available, for example, from DipTech Systems, Inc.

In step E) the coagulant-dipped former of step D) is dried or partially dried. By such a drying or partially drying the solvent and especially the water of the coagulant solution is evaporated or at least partially evaporated resulting in a thin film of coagulant on the former.

According to one embodiment of the present invention step E) is performed at temperatures between 40°C to 100°C, preferably at temperatures between 50°C to 90°C, preferably between 60°C to 80°C and most preferably at about 70°C.

The drying or partially drying can be carried out for at least 10 s, or 20 s, or 30 s or 40 s or 50 s or 1 min. According to a preferred embodiment the drying or partially drying is carried out for a period of time ranging from 1 second to 10 minutes, for example, for 30 seconds, or for 1 minute or for 2 minutes or for 5 minutes. For example, the drying or partially drying is carried out for 1 minute ± 10 seconds.

In step F) the coagulant-coated former of step E) is dipped into the composition of step B) to produce a layer of the composition of step B) on the coagulant-coated former.

The dipping step F) is performed in order to obtain a layer of the inventive composition and, therefore, the inventive composition provided in step B) does not fully drain off the coagulant-coated former after pulling out the former of the inventive composition but remains as a thin film on the former.

According to one embodiment of the present invention, the temperature during step F) is maintained at low temperatures and preferably at temperatures between 20 to 40°C.

According to another embodiment of the present invention dipping step F) is carried out for at least 1 s, e.g. for at least 2 s, 4 s, 6 s, or 8 s. However, also longer dipping time for example 15 s, 30 s or 1 min are possible.

In step G) the layer of the composition formed on the coagulant-coated former is dried. By such a drying the solvent and especially the water of the inventive composition is evaporated or at least partially evaporated resulting in a thin film of inventive composition on the coagulant-coated former.

According to one embodiment of the present invention step G) is performed at temperatures between 15°C to 40°C, preferably at temperatures between 17°C to 30°C, and most preferably at about 20°C.

The drying can be carried out for at least 10 s, or 20 s, or 30 s or 40 s or 50 s or 1 min. According to a preferred embodiment the drying is carried out for a period of time ranging from 1 second to 10 minutes, for example, for 30 seconds, or for 1 minute or for 2 minutes or for 5 minutes. For example, the drying is carried out for 1 minute ± 10 seconds.

The method according to the present invention optionally comprises step H) of dipping the former obtained in step G) into the composition of step B) to produce a further layer of the composition of step B) and drying said further layer. The method according to the present invention optionally comprises step I) of repeating step H). If the optional steps H) and I) are performed a multi-layer film con be produced. More precisely, if optional step H) is present a elastomeric film can be produced that comprises two elastomeric film layers. If optional step I) is present a elastomeric film can be produced that comprises three or more elastomeric film layers.

This optional steps H) and I) are similar to the dipping step F) and the drying step G). According to a preferred embodiment of the present invention, the same parameters are used in the steps H) and if present I) than in the dipping step F) and the drying step G).

In step J) the former obtained in step G) and/or step H) and/or step I) is leached in an aqueous solution. If steps H) and I) are not present the former obtained in step G) is leached after step G). If step H) is present the former obtained in step G) is leached after step G) and/or after step H) and preferably, is merely leached after step H). If step I) is present the former obtained in step G) is leached after step G) and/or after step H) and/or after step I) and preferably, is merely leached after step I).

According to one embodiment of the present invention, the leaching step may be performed at temperatures between 40°C to 100°C, preferably at temperatures between 50°C and 90°C and most preferably at 70°C.

In step K) the former obtained in step J) is heated to produce the total elastomeric film. During the heating step K) the "curing system" present in the inventive composition of step B) enables the cross-linking of the polymer chains in the polymer microparticles in the latex present in the inventive composition. This process is also known as "curing" or "vulcanization" or "crosslinking".

The heating conditions depend on the at least one latex and the at least one curing system used in the inventive composition. The skilled person knows under which conditions the at least one latex can be cured/crosslinked.

According to one embodiment of the present invention step K) is performed at temperatures between 70°C to 150°C and preferably between 110°C to 120°C.

According to one embodiment of the present invention, the heating can be carried out, for example, for at least 1 minute, for at least 2 minutes, for at least 5 minutes, for at least 10 minutes, for at least 20 minutes or for at least 30 minutes.

The heating step K) can be performed at one temperature. Alternatively, the heating step K) can be performed at different temperatures. For example, the temperature can be increased stepwise during step K), for example in 1, 2, 3 or more steps. According to a preferred embodiment of the present invention, the heating step K) is started at about 80°C, then increased to about 100°C and finally, increased to about 110°C. Each heating stage can be performed for a different amount of time or for the same amount of time, for example for at least 1 minute, for at least 2 minutes, for at least 5 minutes, for at least 10 minutes, for at least 20 minutes or for at least 30 minutes. According to an exemplified method each heating step K) is performed for about 10 minutes.

In step L) the total elastomeric film is stripped from the former.

According to one embodiment of the present invention, the stripping of the total elastomeric film from the former in step L) is done by manually gripping and stripping or by using (compressed) air jets, preferably by using air jets.

According to one embodiment of the present invention, a method for preparing an elastomeric film is provided comprising the steps of

A) providing a coagulant solution and
B) providing at least one composition for the preparation of an elastomeric film according to the present invention and
C) providing at least one former,
D) dipping the former of step C) in the solution of step A),
E) drying or partially drying the coagulant-dipped former of step D),
F) dipping the coagulant-coated former of step E) into the composition of step B) to produce a layer of the composition of step B) on the coagulant-coated former,
G) drying the layer of the composition formed on the coagulant-coated former,
J) leaching the former obtained in step G) in an aqueous solution,
K) heating the former obtained in step J) to produce the total elastomeric film, and
L) stripping the total elastomeric film from the former.

According to another embodiment of the present invention a method for preparing an elastomeric film is provided comprising the steps of

A) providing a coagulant solution and
B) providing at least one composition for the preparation of an elastomeric film according to the present invention and
C) providing at least one former,
D) dipping the former of step C) in the solution of step A),
E) drying or partially drying the coagulant-dipped former of step D),
F) dipping the coagulant-coated former of step E) into the composition of step B) to produce a layer of the composition of step B) on the coagulant-coated former,
G) drying the layer of the composition formed on the coagulant-coated former,
H) dipping the former obtained in step G) into the composition of step B) to produce a further layer of the composition of step B) and drying said further layer,

J) leaching the former obtained in step G) and/or step H) in an aqueous solution, and preferably leaching the former obtained in step H) in an aqueous solution,

K) heating the former obtained in step J) to produce the total elastomeric film, and

L) stripping the total elastomeric film from the former.

According to another embodiment of the present invention a method for preparing an elastomeric film is provided comprising the steps of

A) providing a coagulant solution and

B) providing at least one composition for the preparation of an elastomeric film according to the present invention and

C) providing at least one former,

D) dipping the former of step C) in the solution of step A),

E) drying or partially drying the coagulant-dipped former of step D),

F) dipping the coagulant-coated former of step E) into the composition of step B) to produce a layer of the composition of step B) on the coagulant-coated former,

G) drying the layer of the composition formed on the coagulant-coated former,

H) dipping the former obtained in step G) into the composition of step B) to produce a further layer of the composition of step B) and drying said further layer,

I) repeating step H),

J) leaching the former obtained in step G) and/or step H) and/or step I) in an aqueous solution, and preferably leaching the former obtained in step I) in an aqueous solution,

K) heating the former obtained in step J) to produce the total elastomeric film, and

L) stripping the total elastomeric film from the former.

The inventors surprisingly found that the inventive method provides several advantages. For example, the inventors found that by the inventive method an elastomeric film can be prepared from the inventive composition which provides very good mechanical properties, especially very good modulus, very good elongation at break, and/or very good ultimate tensile strength. Furthermore, the inventors found that by the inventive method an elastomeric film can prepared from the inventive composition in a very simple manner on a large scale and very inexpensively.

Additional steps

The method of the present invention may comprise additional method steps.

According to the present invention the leaching step J) is performed in an aqueous solution. According to another embodiment of the present invention leaching step J) is performed in water and most preferably in deionized water before step K).

According to one embodiment of the present invention, the leaching step may be performed at temperatures between 40°C to 100°C, preferably at temperatures between 50°C and 90°C and most preferably at 70°C.

According to one embodiment of the present invention, the former is in the form of a glove and the cuff of the layered elastomeric film in the form of a hand is rolled up after step K) and before step L).

In that case the leaching step J) and the heating step K) can be performed a second time after rolling up the cuff and before step L).

According to another embodiment of the present invention, the inventive method comprises the additional step of cooling the elastomeric film-coated former of step K) to temperatures from 15°C to 30°C, preferably to about 20°C before step L).

According to another embodiment of the present invention at least one releasing agent is added to the coagulant solution in step A) selected from the group consisting of a non-mineral material e.g., composition comprising chlorine, polymer of polyacrylate, polyurethane, starch, preferably chemically modified starch such as corn starch and a metal soap, preferably calcium stearate, and a mineral material, e.g. an insoluble metal carbonate, preferably calcium carbonate or magnesium carbonate, a silicate, preferably talc, kaolin or clay, and preferably calcium carbonate. If the optional releasing agent is a mineral material "powdered" elastomeric films can be provided. If the optional releasing agent is a non-mineral material "powder free" elastomeric films can be provided.

The optional releasing agent may be added to the coagulant solution in step A. Additionally or alternatively, the elastomeric film obtained after step K) and before step L) may be treated with the releasing agent. For example, the inventive method comprises an additional coating step before step L) and after step K) with a composition comprising starch, preferably chemically modified corn starch or a composition comprising at least one polymer, preferably polyacrylate, polyurethane or a mixture thereof or a composition comprising chlorine.

According to one embodiment the chlorine is generated in situ in the composition and released in a controlled manner.

Such an additional step is preferably performed if the former is a hand and gloves are prepared since such an additional treatment may improve the donning of the gloves for the users.

The elastomeric film

An elastomeric film can be produced by the method according to the present invention.

According to one embodiment of the present invention an elastomeric film is produced by a method comprising the steps of

A) providing a coagulant solution and

B) providing at least one composition for the preparation of an elastomeric film comprising:

a) at least one latex,

b) at least one curing system,

c) at least one filler composition, wherein the filler composition consists of a mixture of

i) a first calcium carbonate-comprising material having a calcium carbonate content of at least 90 wt.-%, based on the total weight of the first calcium carbonate-comprising material, and having a weight median particle size $d_{50}$ value in the range from 0.6 μm to 2 μm and a steepness factor of at least 40; and

ii) a second calcium carbonate-comprising material having a calcium carbonate content of at least 90 wt.-%, based on the total weight of the second calcium carbonate-comprising material, and having a weight median particle size $d_{50}$ value in the range from 0.3 μm to 1 μm and a steepness factor of at least 20, wherein the weight median particle size $d_{50}$ value of the first and the second calcium carbonate-comprising material differs by 0.1 μm to 1.1 μm,

C) providing at least one former,

D) dipping the former of step C) in the solution of step A),

E) drying or partially drying the coagulant-dipped former of step D),

F) dipping the coagulant-coated former of step E) into the composition of step B) to produce a layer of the composition of step B) on the coagulant-coated former,

G) drying the layer of the composition formed on the coagulant-coated former,

H) optionally dipping the former obtained in step G) into the composition of step B) to produce a further layer of the composition of step B) and drying said further layer,

I) optionally repeating step H),

J) leaching the former obtained in step G) and/or step H) and/or step I) in an aqueous solution,

K) heating the former obtained in step J) to produce the total elastomeric film,

L) stripping the total elastomeric film from the former.

According to one embodiment the film is in the form of a glove, a balloon, a condom, a probe cover, a dental dam, a finger cot, a catheter or a film and preferably is a glove.

According to one embodiment the average thickness of the total elastomeric film is between 0.01 and 6.0 mm, preferably between 0.05 and 0.15 mm.

According to one embodiment the elastomeric film is in the form of a glove, wherein the glove has a higher mechanical strength compared to a glove that has been prepared the same way, wherein said glove that has been prepared the same way comprises

i) a first calcium carbonate-comprising material having a calcium carbonate content of at least 90 wt.-%, based on the total weight of the first calcium carbonate-comprising material, and having a weight median particle size $d_{50}$ value in the range from 0.6 μm to 2 μm and a steepness factor of at least 40; or

ii) a second calcium carbonate-comprising material having a calcium carbonate content of at least 90 wt.-%, based on the total weight of the second calcium carbonate-comprising material, and having a weight median particle size $d_{50}$ value in the range from 0.3 μm to 1 μm and a steepness factor of at least 20,

The term "that has been prepared the same way" according to the present invention refers to a comparative glove that has been prepared by an identical coating method, but the glove does not comprise a mixture of i) a first calcium carbonate-comprising material having a calcium carbonate content of at least 90 wt.-%, based on the total weight of the first calcium carbonate-comprising material, and having a weight median particle size $d_{50}$ value in the range from

0.6 $\mu$m to 2 $\mu$m and a steepness factor of at least 40; and ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20, wherein the weight median particle size $d_{50}$ value of the first and the second calcium carbonate-comprising material differs by 0.1 $\mu$m to 1.1 $\mu$m. Rather, the comparative glove comprises merely i) or ii) as defined above in the same amount as the mixture than the inventive glove. Apart from this difference the compositions, the gloves are prepared from, are identical which means that they comprise the same compounds in the same amounts. Furthermore, these two compositions as well as the gloves have been treated the same way which means that the mixing / storing / curing treatments are identical

The term "higher mechanical strength" according to the present invention means that the value of the mechanical strength of the inventive elastomeric film in the form of a glove is higher than the value of the mechanical strength of the comparative elastomeric film in the form of a glove. A higher mechanical strength means that the mechanical strength is improved.

The term "mechanical strength" according to the present invention refers to the behavior of the elastomeric film which is subjected to stresses or strains. The mechanical strength includes several values like the 300% modulus, the elongation at break, and the ultimate tensile strength. The skilled person knows these values and test methods how to determine these values.

The "300% modulus" or "tensile stress at 300%" according to the present invention is the measure of the force (stress) in Newton per square millimetre (N/mm$^2$) or in Mega Pascal (MPa) required to produce a elongation (strain) of 300%. Typical tensile stress instruments are compact and easy to use and known to the skilled person. According to a preferred embodiment of the present invention, the 300% modulus is measured according to ASTM D412-16.

The "elongation at break" according to the present invention is the measure of the percentage increase in length that occurs before it breaks under tension. Typical instruments to measure the ultimate elongation are known to the skilled person. According to a preferred embodiment of the present invention, the ultimate elongation is measured according to DIN EN 455-2:2009 Physical properties and given in %.

The "ultimate tensile strength" according to the present invention is the measure of the strength that a material can withstand while being stretched before breaking. Typical instruments to measure the tensile strength are known to the skilled person. According to a preferred embodiment of the present invention, the tensile strength is measured according to ASTM D412-16 and given in MPa.

The scope and interest of the invention will be better understood based on the following examples which are intended to illustrate certain embodiments of the invention.

**Examples**

**1 Measurement methods and materials**

In the following, measurement methods and materials implemented in the examples are described.

Particle Size

The particle distribution of the untreated ground calcium carbonate-comprising filler material was measured using a Sedigraph 5120 from the company Micromeritics, USA. The method and the instruments are known to the skilled person and are commonly used to determine grain size of fillers and pigments. The measurement was carried out in an aqueous solution comprising 0.1 wt.-% $Na_4P_2O_7$. The samples were dispersed using a high speed stirrer and supersonics.

Specific Surface Area (BET)

The specific surface area was measured using nitrogen and the BET method according to ISO 9277.

Elongation at break

Unaged and aged films were tested according to procedures specified in DIN EN 455-2:2009 Physical properties.

Mechanical Properties of Films

The tensile properties (ultimate tensile strength) and the modulus of the unaged films and aged films at 100°C for 22 hours were determined using an Instron 5565 testing machine according to the ASTM D412 with a crosshead speed of 500 mm/min. The test was conducted under room temperature (25 $\pm$ 1°C).

Dumbbell test specimen were stamp-cut with Die D as specified in ASTM D412.

Viscosity

The viscosity measured is a Brookfield viscosity measured using Brookfield RVTDV-II instrumentation at 20 rpm, and selecting the spindle such that the % mode value lies between 20 and 80.

**2 Materials**

**SYNTHOMER 6330[T]:** An aqueous, colloidal dispersion of carboxylated butadiene-acrylonitrile copolymer with a medium acrylonitrile level. The dispersion contains an emulsifier system and is stabilized with an antioxidant.

**OCTOCURE 462[T]:** Zinc Oxide 60 wt.-% aqueous dispersion, based on the total weight of the dispersion. The zinc oxide is based on French process zinc oxide produced via a direction oxidation of zinc ingot. The dispersion is commercially available from Tiarco Chemical and used without further treatment.

**OCTOCURE 456 [T]:** Sulfur in aqueous dispersion, ball-milled to a uniform small particle size, 70 wt.-% total solids, based on the total weight of the dispersion. The dispersion is commercially available from Tiarco Chemical and used without further treatment.

**OCTOCURE 573 [T]:** Zinc Oxide 60 wt.-% dispersion, based on the total weight of the dispersion, which can be readily incorporated directly into latex emulsion compounds. The dispersion is commercially available from Tiarco Chemical and used without further treatment.

**OCTOCURE ZDE-50 [T]:** Zinc diethyldithiocarbamate 50 wt.-% aqueous dispersion, based on the total weight of the dispersion. The dispersion is commercially available from Tiarco Chemical and used without further treatment

**Filler composition 1** (comparative): Natural ground calcium carbonate in a slurry form, commercially available from Omya International AG, Switzerland (d$_{50}$ = 0.6 $\mu$m; d$_{98}$ = 3 $\mu$m; content of particles < 1 $\mu$m = 80 wt.-%, based on the total dry weight of the natural ground calcium carbonate; solids content = 50 wt.-%, based on the total weight of the aqueous suspension; density of slurry = 1500 Kg/m$^3$; viscosity = 200 mPas; steepness factor 26).

**Filler composition 2** (comparative): Natural ground calcium carbonate in a powder form, commercially available from Omya International AG, Switzerland ($d_{50}$: 0.9 $\mu$m; d$_{98}$ = 4 $\mu$m; content of particles < 2 $\mu$m = 90 wt.-%, based on the total dry weight of the natural ground calcium carbonate; steepness factor 66).

**Filler composition 3** (inventive): Mixture of filler composition 1 (90 wt.% based on the total weight of the filler composition 3, calculated from the dry weight of the natural ground calcium carbonate in filler compositions 1 and 2) and filler composition 2 (10 wt.% based on the total weight of the filler composition 3).

Preparation of the compositions

1) Preparation of the nitrile latex compounding formulation

NBR latex (Acrylonitrile Butadiene Rubber) branded Synthomer 6330 was compounded in the lab following the below formulation (Table 1). More precisely, all the components listed in Table 1 were mixed in a beaker except the filler composition X. The mixture was continuously stirred for 24 hours. Then 5 phr of the filler composition X was added to the compounded NBR latex.

**Table 1:** Nitrile latex compounding formulation

| Ingredients | phr |
| --- | --- |
| NBR (Synthomer 6330) | 100 |
| KOH | 1.0 |
| ZnO (Octocure 573) | 1.2 |
| Sulfur (Octocure 456) | 0.8 |
| Zinc diethyldithiocarbamate (ZDEC) (Octocure ZDE) | 0.8 |
| Filler composition X | 5.0 |

2) Preparation of the coagulant solution

The coagulant solution comprised 20 wt.% of calcium nitrate.

### 3) Preparation of unaged films

The former (unglazed porcelain plates) were first dipped into the coagulant solution and afterwards, the coagulant-dipped formers were dried at 60-70°C for 20 seconds.

After the drying step, the formers were then dipped into the freshly prepared nitrile latex compounding formulation as described above and afterwards partially dried further at 60-70°C for 20 seconds.

The formed latex films were then subjected to a leaching step; i.e. subjected to a warm water (50-55°C) immersion for 2 minutes.

The films underwent a heating step, wherein the latex films were heated in an oven at 120°C for 20 minutes to form the desired elastomeric nitrile films. The formers were then removed from the oven and cooled to room temperature, before being powdered with USP grade corn starch. Then the films were stripped off from the former to obtain the unaged films.

The mechanical properties of the cured unaged films were then tested.

### 4) Preparation of aged films

The cured unaged films above were further aged in an oven at 100°C for 22 hours to obtain aged films.

Results

### 1) Unaged

**Table 2:** Mechanical properties of the unaged films obtained using various filler compositions

| Unaged | Modulus (MPa) | | | | UTS (MPa) | EB (%) |
|---|---|---|---|---|---|---|
| | 0 | 100 | 300 | 500 | | |
| 1) Control (without filler) | 0 | 1.851 | 3.579 | 9.277 | 26.031 | 614.8 |
| 2) Filler Composition 1 | 0 | 2.522 | 5.607 | 17.613 | 32.226 | 573.1 |
| 3) Filler Composition 2 | 0 | 2.138 | 4.096 | 9.383 | 27.675 | 628.2 |
| 5) Filler Composition 3 | 0 | 2.36 | 4.85 | 13.85 | 33.654 | 645.2 |
| UTS = Ultimate Tensile Strength EB = Elongation at Break | | | | | | |

As it can be seen from Table 2 the inventive composition comprising the filler composition 3 shows a synergetic effect on the ultimate tensile strength and elongation at break compared to the comparative filler composition 1 and 2 taken alone. The ultimate tensile strength and the elongation at break of the unaged films produced with the composition 3 according to the present invention are considerably improved and superior compared to the filler compositions 1 and 2 taken alone.

### 2) Aged

**Table 3:** Mechanical properties of the aged films obtained using various filler compositions

| Aged (oxidation) | Modulus (MPa) | | | | UTS (MPa) | EB (%) |
|---|---|---|---|---|---|---|
| | 0 | 100 | 300 | 500 | | |
| 1) Control (without filler) | 0 | 2.417 | 5.692 | 21.35 | 26.804 | 526 |
| 2) Filler Composition 1 | 0 | 2.861 | 7.264 | 25.994 | 31.287 | 521.1 |
| 3) Filler Composition 2 | 0 | 2.954 | 6.814 | 18.292 | 27.659 | 529 |

(continued)

| Aged (oxidation) | Modulus (MPa) | | | | UTS (MPa) | EB (%) |
|---|---|---|---|---|---|---|
| | 0 | 100 | 300 | 500 | | |
| 5) Filler Composition 3 | 0 | 2.726 | 6.31 | 19.54 | 32.581 | 615.3 |
| UTS = Ultimate Tensile Strength EB = Elongation at Break | | | | | | |

As it can be seen from Table 3, the inventive composition comprising the filler composition 3 shows a synergetic effect on the ultimate tensile strength and elongation at break compared to the filler composition 1 and 2 taken alone. The ultimate tensile strength and the elongation at break of the aged films produced with the composition 3 according to the present invention are considerably improved and superior compare to the filler compositions 1 and 2 taken alone.

**Claims**

1. A composition for the preparation of an elastomeric film comprising:

   a) at least one latex,
   b) at least one curing system,
   c) at least one filler composition, wherein the filler composition consists of a mixture of

      i) a first calcium carbonate-comprising material having a calcium carbonate content of at least 90 wt.-%, based on the total weight of the first calcium carbonate-comprising material, and having a weight median particle size $d_{50}$ value in the range from 0.6 $\mu$m to 2 $\mu$m and a steepness factor of at least 40; and
      ii) a second calcium carbonate-comprising material having a calcium carbonate content of at least 90 wt.-%, based on the total weight of the second calcium carbonate-comprising material, and having a weight median particle size $d_{50}$ value in the range from 0.3 $\mu$m to 1 $\mu$m and a steepness factor of at least 20,

   wherein the weight median particle size $d_{50}$ value of the first and the second calcium carbonate-comprising material differs by 0.1 $\mu$m to 1.1 $\mu$m.

2. The composition according to claim 1, wherein the at least one latex of a) is a natural latex, a synthetic latex or a mixture thereof and preferably is selected from the group consisting of natural latex, acrylonitrile-butadiene latex, nitrile latex, carboxylated nitrile latex, carboxylated polyacrylonitrile-butadiene latex, gutta-percha latex, butadiene latex, acrylate latex, fluoro latex, styrene-butadiene latex, polystyrene-butadiene latex, styrene-isoprene-butadiene latex, synthetic isoprene latex, polyisoprene latex, ethylene-propylene latex, ethylene-propylene-diene latex, butyl latex, ethylenevinyl acetate latex, ethylene-methyl acrylate latex, epoxide latex, polynorbornene latex, polyalkenylenes, silicone latex, polyurethane latex, thiokol latex, halobutyl latex, chloropolyethylenes, chlorosulfonyl polyethylenes, polychloroprene latex, polyphosphazenes and mixtures thereof and most preferably is acrylonitrile-butadiene latex and/or carboxylated polyacrylonitrile-butadiene latex.

3. The composition according to any of the preceding claims, wherein at least one stabilizer is present in the composition and preferably the at least one stabilizer is sodium dodecyl sulfate.

4. The composition according to any of the preceding claims, wherein the first and/or the second calcium carbonate-comprising material is/are selected from the group consisting of ground calcium carbonate, preferably marble, limestone, and/or chalk, precipitated calcium carbonate, preferably vaterite, calcite and/or aragonite, and mixtures thereof, more preferably the calcium carbonate-comprising material is a ground calcium carbonate and/or wherein the dry weight ratio of the first to the second calcium carbonate-comprising material is from 5:95 to 30:70, preferably from 8:92 to 25:75 and most preferably from 10:90 to 20:80.

5. The composition according to any of the preceding claims, wherein the first calcium carbonate-comprising material has

   i) a weight median particle size $d_{50}$ value in the range from 0.6 $\mu$m to 2 $\mu$m, preferably in the range from 0.7

μm to 1.5 μm, even more preferably in the range from 0.8 μm to 1.0 μm and most preferably of about 0.9 μm, and/or

ii) a top cut ($d_{98}$) of ≤ 20 μm, preferably of ≤ 10 μm, more preferably of ≤ 8 μm, even more preferably of ≤ 5 μm and most preferably of about 4 μm, and/or

iii) a residue on a 45 μm sieve of ≤ 1 wt.-% based on the total dry weight of the first calcium carbonate-comprising material, preferably of ≤ 0.5 wt.-%, even more preferably of ≤ 0.1 wt.-%, even more preferably of ≤ 0.05 wt.-% and most preferably of about 0.01 wt.-%, and/or

iv) the amount of particles < 2 μm is ≥ 80 wt.-%, based on the total dry weight of the first calcium carbonate-comprising material, preferably ≥ 83 wt.-%, even more preferably ≥ 86 wt.-%, and most preferably is about 90 wt.-%, and/or

v) a residual total moisture content of from 0.01 wt.-% to 1.5 wt.-%, based on the total dry weight of the first calcium carbonate-comprising material, preferably from 0.1 wt.-% to 1.0 wt.-%, more preferably from 0.2 wt.-% to 0.8 wt.-%, even more preferably from 0.5 wt.-% to 0.7 wt.-% and most preferably of about 0.6 wt.-%, and/or

vi) a calcium carbonate content of at least 93 wt.-%, based on the total dry weight of the first calcium carbonate-comprising material, preferably of at least 95 wt.-%, even more preferably of at least 97 wt.-% and most preferably of about 98 wt.-%, and/or

vii) a HCI insoluble content of ≤ 10 wt.-% based on the total dry weight of the first calcium carbonate-comprising material, preferably of ≤ 7 wt.-%, even more preferably of ≤ 5 wt.-%, even more preferably of ≤ 3 wt.-% and most preferably of about 2 wt.-%, and/or

viii) a steepness factor of at least 45, preferably of at least 50 and most preferably of at least 60 and/or

wherein the first calcium carbonate-comprising material is used in form of a powder.

6. The composition according to any of the preceding claims, wherein the second calcium carbonate-comprising material has

i) a weight median particle size $d_{50}$ value in the range from 0.4 μm to 0.9 μm, preferably in the range from 0.5 μm to 0.8 μm, even more preferably in the range from 0.5 μm to 0.7 μm and most preferably of about 0.6 μm, and/or

ii) a top cut ($d_{98}$) of ≤ 20 μm, preferably of ≤ 10 μm, more preferably of ≤ 8 μm, even more preferably of ≤ 5 μm and most preferably of about 4 μm, and/or

iii) a residue on a 45 μm sieve of ≤ 1 wt.-% based on the total dry weight of the second calcium carbonate-comprising material, preferably of ≤ 0.5 wt.-%, even more preferably of ≤ 0.1 wt.-%, even more preferably of ≤ 0.05 wt.-% and most preferably of about 0.01 wt.-%, and/or

iv) the amount of particles < 1 μm is ≥ 70 wt.-%, based on the total dry weight of the second calcium carbonate-comprising material, preferably ≥ 73 wt.-%, even more preferably ≥ 76 wt.-%, and most preferably is about 80 wt.-%, and/or

v) a calcium carbonate content of at least 93 wt.-%, based on the total dry weight of the second calcium carbonate-comprising material, preferably of at least 95 wt.-%, even more preferably of at least 97 wt.-% and most preferably of about 97.5 wt.-%, and/or

vi) a HCI insoluble content of ≤ 10 wt.-% based on the total dry weight of the second calcium carbonate-comprising material, preferably of ≤ 7 wt.-%, even more preferably of ≤ 5 wt.-%, even more preferably of ≤ 3 wt.-%, even more preferably of ≤ 2 wt.-% and most preferably of about 0.9 wt.-%, and/or

vii) a steepness factor of at least 22, preferably of at least 24 and most preferably of at least 25 and/or

wherein the second calcium carbonate-comprising material is used in form of an aqueous suspension, preferably in form of an aqueous suspension having a solids content of at least 30 wt.-%, based on the total weight of the aqueous suspension preferably of at least 40 wt.-%, even more preferably of at least 45 wt.-% and most preferably of about 50 wt.-%.

7. The composition according to any of the preceding claims having a pH value from 7 to 13, preferably from 8 to 12 and most preferably from 9 to 11 and/or
having a viscosity in the range of 50 to 200 mPa·s.

8. The composition according to any of the preceding claims, wherein the curing system is present in the composition in an amount of at least 1 phr, based on the at least one latex, preferably in an amount from 2 phr to 15 phr, even more preferably from 3 phr to 10 phr and most preferably from 3.5 phr to 5 phr and/or
wherein the at least one filler composition is present in the composition in an amount of at least 1 phr, based on the at least one latex, preferably in an amount from 2 phr to 40 phr, even more preferably from 3 phr to 30 phr and most preferably from 4 phr to 25 phr.

9. Use of the composition according to claims 1 to 8 for the preparation of an elastomeric film and preferably for the preparation of a glove.

10. A method for preparing an elastomeric film comprising the steps of

A) providing a coagulant solution
B) providing at least one composition for the preparation of an elastomeric film according to claims 1 to 8 and
C) providing at least one former,
D) dipping the former of step C) in the solution of step A),
E) drying or partially drying the coagulant-dipped former of step D),
F) dipping the coagulant-coated former of step E) into the composition of step B) to produce a layer of the composition of step B) on the coagulant-coated former,
G) drying the layer of the composition formed on the coagulant-coated former,
H) optionally dipping the former obtained in step G) into the composition of step B) to produce a further layer of the composition of step B) and drying said further layer,
I) optionally repeating step H),
J) leaching the former obtained in step G) and/or step H) and/or step I) in an aqueous solution
K) heating the former obtained in step J) to produce the total elastomeric film,
L) stripping the total elastomeric film from the former.

11. The method according to claim 10, wherein the total solid content of the composition of step B) is between 5 wt.-% to 50 wt.-%, based on the total weight of the composition of step B), preferably between 10 wt.-% to 30 wt.-% and most preferably about 20 wt.-%.

12. The method according to any of claims 10 or 11, wherein the at least one coagulant solution is an aqueous composition comprising at least one coagulant selected from the group consisting of calcium nitrate, calcium chloride, magnesium nitrate, acetic acid, formic acid, sodium silicofluoride and mixtures thereof, and preferably is calcium nitrate and/or wherein the at least one coagulant solution comprises at least one releasing agent selected from the group consisting of a non-mineral material e.g., composition comprising chlorine, a polymer of polyacrylate, polyurethane, starch, preferably chemically modified starch such as corn starch and a metal soap, preferably calcium stearate and a mineral material, e.g., an insoluble metal carbonate, preferably calcium carbonate or magnesium carbonate, a silicate, preferably talc, kaolin or clay, and preferably calcium carbonate.

13. The method according to any of claims 10 to 12, wherein step J) is performed in water and preferably in deionized water before step K).

14. The method according to any of claims 10 to 13, comprising the additional step of cooling the elastomeric film-coated former of step K) to temperatures from 15°C to 30°C, preferably to about 20°C before step L) and optionally comprising an additional coating step after step K) and before step L) of treating with a releasing agent selected from the group consisting of a non-mineral material e.g., composition comprising chlorine, a polymer of polyacrylate, polyurethane, starch, preferably chemically modified starch such as corn starch and a metal soap, preferably calcium stearate and a mineral material, e.g., an insoluble metal carbonate, preferably calcium carbonate or magnesium carbonate, a silicate, preferably talc, kaolin or clay, and preferably calcium carbonate.

15. An elastomeric film produced by the method of any one of claims 10 to 14.

16. The elastomeric film according to claim 15, wherein the filler in the elastomeric film is present in an amount of 1 wt.-% to 40 wt.-%, based on the total weight of the elastomeric film, preferably in an amount of 5 wt.-% to 20 wt.% and most preferably in an amount of 5 wt.-% to 10 wt.% and/or wherein the film is in the form of a glove, a balloon, a condom, a probe cover, a dental dam, a finger cot, a catheter or a film and preferably is a glove.

17. The elastomeric film according to claims 15 to 16, wherein the average thickness of the total elastomeric film is between 0.01 and 6.0 mm, preferably between 0.05 and 0.15 mm and optionally wherein the film is in the form of a glove, wherein the glove has a higher mechanical strength compared to a glove that has been prepared the same way, wherein said glove that has been prepared the same way comprises

i) a first calcium carbonate-comprising material having a calcium carbonate content of at least 90 wt.-%, based on the total weight of the first calcium carbonate-comprising material and having a weight median particle size $d_{50}$ value in the range from 0.6 $\mu$m to 2 $\mu$m and a steepness factor of at least 40 or

ii) a second calcium carbonate-comprising material having a calcium carbonate content of at least 90 wt.-%, based on the total weight of the second calcium carbonate-comprising material and having a weight median particle size $d_{50}$ value in the range from 0.3 $\mu$m to 1 $\mu$m and a steepness factor of at least 20.

**Patentansprüche**

1. Zusammensetzung zur Herstellung eines Elastomerfilms, umfassend:

   a) mindestens ein Latex,
   b) mindestens ein Härtungssystem,
   c) mindestens eine Füllstoffzusammensetzung, wobei die Füllstoffzusammensetzung aus einem Gemisch besteht aus

   i) einem ersten calciumcarbonathaltigen Material mit einem Calciumcarbonatgehalt von mindestens 90 Gew.-%, bezogen auf das Gesamtgewicht des ersten calciumcarbonathaltigen Materials, und einem $d_{50}$-Wert der gewichtsmittleren Teilchengröße im Bereich von 0,6 $\mu$m bis 2 $\mu$m und einem Steilheitsfaktor von mindestens 40; und
   ii) einem zweiten calciumcarbonathaltigen Material mit einem Calciumcarbonatgehalt von mindestens 90 Gew.-%, bezogen auf das Gesamtgewicht des zweiten calciumcarbonathaltigen Materials, und einem $d_{50}$-Wert der gewichtsmittleren Teilchengröße im Bereich von 0,3 $\mu$m bis 1 $\mu$m und einem Steilheitsfaktor von mindestens 20,

   wobei sich der $d_{50}$-Wert der gewichtsmittleren Teilchengröße des ersten und des zweiten calciumcarbonathaltigen Materials um 0,1 $\mu$m bis 1,1 $\mu$m unterscheidet.

2. Zusammensetzung nach Anspruch 1, wobei das mindestens eine Latex aus a) ein Naturlatex, ein synthetisches Latex oder ein Gemisch davon ist und bevorzugt ausgewählt ist aus der Gruppe bestehend aus Naturlatex, Acrylnitril-Butadien-Latex, Nitril-Latex, carboxyliertem Nitril-Latex, carboxyliertem Polyacrylnitril-Butadien-Latex, Guttapercha-Latex, Butadien-Latex, Acrylat-Latex, Fluor-Latex, Styrol-Butadien-Latex, Polystyrol-Butadien-Latex, Styrol-Isopren-Butadien-Latex, synthetischem Isopren-Latex, Polyisopren-Latex, Ethylen-Propylen-Latex, Ethylen-Propylen-Dien-Latex, Butyl-Latex, Ethylen-Vinylacetat-Latex, Ethylen-Methylacrylat-Latex, Epoxid-Latex, Polynorbornen-Latex, Polyalkenylenen, Silikon-Latex, Polyurethan-Latex, Thiokol-Latex, Halobutyl-Latex, Chlorpolyethylenen, Chlorsulfonyl-Polyethylenen, Polychloropren-Latex, Polyphosphazenen und Gemischen davon, und besonders bevorzugt Acrylnitril-Butadien-Latex und/oder carboxyliertes Polyacrylnitril-Butadien-Latex ist.

3. Zusammensetzung nach einem der vorstehenden Ansprüche, wobei mindestens ein Stabilisator in der Zusammensetzung vorhanden ist, und der mindestens eine Stabilisator bevorzugt Natriumdodecylsulfat ist.

4. Zusammensetzung nach einem der vorstehenden Ansprüche, wobei das erste und/oder das zweite calciumcarbonathaltige Material ausgewählt ist/sind aus der Gruppe bestehend aus gemahlenem Calciumcarbonat, bevorzugt Marmor, Kalkstein und/oder Kalk, gefälltem Calciumcarbonat, bevorzugt Vaterit, Calcit und/oder Aragonit und Gemischen davon, bevorzugter das calciumcarbonathaltige Material ein gemahlenes Calciumcarbonat ist, und/oder wobei das Trockengewichtsverhältnis des ersten zum zweiten calciumcarbonathaltigen Material 5:95 bis 30:70, bevorzugt 8:92 bis 25:75, und besonders bevorzugt 10:90 bis 20:80 beträgt.

5. Zusammensetzung nach einem der vorstehenden Ansprüche, wobei das erste calciumcarbonathaltige Material aufweist

   i) einen $d_{50}$-Wert der gewichtsmittleren Teilchengröße im Bereich von 0,6 $\mu$m bis 2 $\mu$m, bevorzugt im Bereich von 0,7 $\mu$m bis 1,5 $\mu$m, noch bevorzugter im Bereich von 0,8 $\mu$m bis 1,0 $\mu$m und besonders bevorzugt von etwa 0,9 $\mu$m, und/oder
   ii) eine Obergrenze ($d_{98}$) von $\leq$ 20 $\mu$m, bevorzugt $\leq$ 10 $\mu$m, bevorzugter $\leq$ 8 $\mu$m, noch bevorzugter $\leq$ 5 $\mu$m und besonders bevorzugt von etwa 4 $\mu$m, und/oder
   iii) einen Rückstand auf einem 45 $\mu$m-Sieb, bezogen auf das Gesamttrockengewicht des ersten calciumcarbonathaltigen Materials, von ≤ 1 Gew.-%, bevorzugt ≤ 0,5 Gew.-%, noch bevorzugter ≤ 0,1 Gew.-%, noch bevorzugter ≤ 0,05 Gew.- %, und besonders bevorzugt von etwa 0,01 Gew.-%, und/oder

iv) die Menge von Teilchen < 2 μm, bezogen auf das Gesamttrockengewicht des ersten calciumcarbonathaltigen Materials, ≥ 80 Gew.-%, bevorzugt ≥ 83 Gew.-%, noch bevorzugter ≥ 86 Gew.-%, und besonders bevorzugt etwa 90 Gew.-% beträgt, und/oder

v) einen Gesamtrestfeuchtegehalt, bezogen auf das Gesamttrockengewicht des ersten calciumcarbonathaltigen Materials, von 0,01 Gew.-% bis 1,5 Gew.-%, bevorzugt 0,1 Gew.-% bis 1,0 Gew.-%, bevorzugter 0,2 Gew.-% bis 0,8 Gew.-%, noch bevorzugter 0,5 Gew.-% bis 0,7 Gew.-%, und besonders bevorzugt von etwa 0,6 Gew.-%, und/oder

vi) einen Calciumcarbonatgehalt, bezogen auf das Gesamttrockengewicht des ersten calciumcarbonathaltigen Materials, von mindestens 93 Gew.-%, bevorzugt mindestens 95 Gew.-%, noch bevorzugter mindestens 97 Gew.-%, und besonders bevorzugt von etwa 98 Gew.-%, und/oder

vii) einen HCl-unlöslichen Gehalt, bezogen auf das Gesamttrockengewicht des ersten calciumcarbonathaltigen Materials, von ≤ 10 Gew.-%, bevorzugt ≤ 7 Gew.-%, noch bevorzugter ≤ 5 Gew.-%, noch bevorzugter ≤ 3 Gew.- %, und besonders bevorzugt von etwa 2 Gew.-%, und/oder

viii) einen Steilheitsfaktor von mindestens 45, bevorzugt mindestens 50 und besonders bevorzugt mindestens 60, und/oder

wobei das erste calciumcarbonathaltige Material in Form eines Pulvers verwendet wird.

6. Zusammensetzung nach einem der vorstehenden Ansprüche, wobei das zweite calciumcarbonathaltige Material aufweist

i) einen $d_{50}$-Wert der gewichtsmittleren Teilchengröße im Bereich von 0,4 μm bis 0,9 μm, bevorzugt im Bereich von 0,5 μm bis 0,8 μm, noch bevorzugter im Bereich von 0,5 μm bis 0,7 μm, und besonders bevorzugt von etwa 0,6 μm, und/oder

ii) eine Obergrenze ($d_{98}$) von ≤ 20 μm, bevorzugt ≤ 10 μm, bevorzugter ≤ 8 μm, noch bevorzugter ≤ 5 μm und besonders bevorzugt von etwa 4 μm, und/oder

iii) einen Rückstand auf einem 45 μm-Sieb, bezogen auf das Gesamttrockengewicht des zweiten calciumcarbonathaltigen Materials, von ≤ 1 Gew.-%, bevorzugt ≤ 0,5 Gew.-%, noch bevorzugter ≤ 0,1 Gew.-%, noch bevorzugter ≤ 0,05 Gew.- %, und besonders bevorzugt von etwa 0,01 Gew.-%, und/oder

iv) die Menge von Teilchen < 1 μm, bezogen auf das Gesamttrockengewicht des zweiten calciumcarbonathaltigen Materials, ≥ 70 Gew.-%, bevorzugt ≥ 73 Gew.-%, noch bevorzugter ≥ 76 Gew.-%, und besonders bevorzugt etwa 80 Gew.-% beträgt, und/oder

v) einen Calciumcarbonatgehalt, bezogen auf das Gesamttrockengewicht des zweiten calciumcarbonathaltigen Materials, von mindestens 93 Gew.-%, bevorzugt mindestens 95 Gew.-%, noch bevorzugter mindestens 97 Gew.-%, und besonders bevorzugt von etwa 97,5 Gew.-%, und/oder

vi) einen HCl-unlöslichen Gehalt, bezogen auf das Gesamttrockengewicht des zweiten calciumcarbonathaltigen Materials, von ≤ 10 Gew.-%, bevorzugt ≤ 7 Gew.- %, noch bevorzugter ≤ 5 Gew.-%, noch bevorzugter ≤ 3 Gew.- %, noch bevorzugter ≤ 2 Gew.-%, und besonders bevorzugt von etwa 0,9 Gew.-%, und/oder

vii) einen Steilheitsfaktor von mindestens 22, bevorzugt mindestens 24 und besonders bevorzugt mindestens 25, und/oder

wobei das zweite calciumcarbonathaltige Material in Form einer wässrigen Suspension verwendet wird, bevorzugt in Form einer wässrigen Suspension mit einem Feststoffgehalt, bezogen auf das Gesamtgewicht der wässrigen Suspension, von mindestens 30 Gew.-%, bevorzugt mindestens 40 Gew.-%, noch bevorzugter mindestens 45 Gew.- %, und besonders bevorzugt von etwa 50 Gew.-%.

7. Zusammensetzung nach einem der vorstehenden Ansprüche mit einem pH-Wert von 7 bis 13, bevorzugt 8 bis 12 und besonders bevorzugt 9 bis 11, und/oder mit einer Viskosität im Bereich von 50 bis 200 mPa s.

8. Zusammensetzung nach einem der vorstehenden Ansprüche, wobei das Härtungssystem in der Zusammensetzung, bezogen auf das mindestens eine Latex, in einer Menge von mindestens 1 phr, bevorzugt in einer Menge von 2 phr bis 15 phr, noch bevorzugter 3 phr bis 10 phr, und besonders bevorzugt 3,5 phr bis 5 phr vorhanden ist, und/oder wobei die mindestens eine Füllstoffzusammensetzung in der Zusammensetzung, bezogen auf das mindestens eine Latex, in einer Menge von mindestens 1 phr, bevorzugt in einer Menge von 2 phr bis 40 phr, noch bevorzugter 3 phr bis 30 phr, und besonders bevorzugt 4 phr bis 25 phr vorhanden ist.

9. Verwendung derZusammensetzung nach den Ansprüchen 1 bis 8 zur Herstellung eines Elastomerfilms, und bevorzugt zur Herstellung eines Handschuhs.

10. Verfahren zur Herstellung eines Elastomerfilms, das die Schritte umfasst des

A) Bereitstellens einer Koagulationsmittellösung,
B) Bereitstellens mindestens einer Zusammensetzung zur Herstellung eines Elastomerfilms nach den Ansprüchen 1 bis 8, und
C) Bereitstellens mindestens einer Tauchform,
D) Eintauchens der Tauchform aus Schritt C) in die Lösung aus Schritt A),
E) Trocknens oder teilweisen Trocknens der in das Koagulationsmittel eingetauchten Tauchform aus Schritt D),
F) Eintauchens der mit Koagulationsmittel beschichteten Tauchform aus Schritt E) in die Zusammensetzung aus Schritt B), um eine Schicht der Zusammensetzung aus Schritt B) auf der mit Koagulationsmittel beschichteten Tauchform zu erzeugen,
G) Trocknens der auf der mit Koagulationsmittel beschichteten Tauchform gebildeten Schicht der Zusammensetzung,
H) gegebenenfalls Eintauchens der in Schritt G) erhaltenen Tauchform in die Zusammensetzung aus Schritt B), um eine weitere Schicht der Zusammensetzung aus Schritt B) zu erzeugen, und Trocknens der weiteren Schicht,
I) gegebenenfalls Wiederholens von Schritt H),
J) Auslaugens der in Schritt G) und/oder Schritt H) und/oder Schritt I) erhaltenen Tauchform in einer wässrigen Lösung,
K) Erwärmens der in Schritt J) erhaltenen Tauchform, um den gesamten Elastomerfilm zu erzeugen,
L) Abziehens des gesamten Elastomerfilms von der Tauchform.

11. Verfahren nach Anspruch 10, wobei der Gesamtfeststoffgehalt der Zusammensetzung aus Schritt B), bezogen auf das Gesamtgewicht der Zusammensetzung aus Schritt b), zwischen 5 Gew.-% bis 50 Gew.-%, bevorzugt zwischen 10 Gew.-% bis 30 Gew.-%, und besonders bevorzugt etwa 20 Gew.-% beträgt.

12. Verfahren nach einem der Ansprüche 10 oder 11, wobei die mindestens eine Koagulationsmittellösung eine wässrige Zusammensetzung ist, die mindestens ein Koagulationsmittel umfasst, ausgewählt aus der Gruppe bestehend aus Calciumnitrat, Calciumchlorid, Magnesiumnitrat, Essigsäure, Ameisensäure, Natriumsilicofluorid und Gemischen davon, und bevorzugt Calciumnitrat ist, und/oder
wobei die mindestens eine Koagulationsmittellösung mindestens ein Trennmittel umfasst, ausgewählt aus der Gruppe bestehend aus einem nichtmineralischen Material, z. B. einer Zusammensetzung, die Chlor, ein Polymer von Polyacrylat, Polyurethan, Stärke, bevorzugt chemisch modifizierter Stärke wie etwa Maisstärke, und einer Metallseife, bevorzugt Calciumstearat umfasst, und einem mineralischen Material, z. B. einem unlöslichen Metallcarbonat, bevorzugt Calciumcarbonat oder Magnesiumcarbonat, einem Silikat, bevorzugt Talk, Kaolin oder Ton, und bevorzugt Calciumcarbonat.

13. Verfahren nach einem der Ansprüche 10 bis 12, wobei Schritt J) vor Schritt K) in Wasser, und bevorzugt in entionisiertem Wasser durchgeführt wird.

14. Verfahren nach einem der Ansprüche 10 bis 13, das vor Schritt L) den zusätzlichen Schritt des Abkühlens der mit dem Elastomerfilm beschichteten Tauchform aus Schritt K) auf Temperaturen von 15 °C bis 30 °C, bevorzugt auf etwa 20 °C umfasst, und gegebenenfalls nach Schritt K) und vor Schritt L) einen zusätzlichen Beschichtungsschritt des Behandelns mit einem Trennmittel umfasst, ausgewählt aus der Gruppe bestehend aus einem nichtmineralischen Material, z. B. einer Zusammensetzung, die Chlor, ein Polymer von Polyacrylat, Polyurethan, Stärke, bevorzugt chemisch modifizierter Stärke wie etwa Maisstärke, und einer Metallseife, bevorzugt Calciumstearat umfasst, und einem mineralischen Material, z. B. einem unlöslichen Metallcarbonat, bevorzugt Calciumcarbonat oder Magnesiumcarbonat, einem Silikat, bevorzugt Talk, Kaolin oder Ton, und bevorzugt Calciumcarbonat.

15. Elastomerfilm, der nach dem Verfahren nach einem der Ansprüche 10 bis 14 erzeugt wird.

16. Elastomerfilm nach Anspruch 15, wobei der Füllstoff im Elastomerfilm, bezogen auf das Gesamtgewicht des Elastomerfilms, in einer Menge von 1 Gew.-% bis 40 Gew.-%, bevorzugt in einer Menge von 5 Gew.-% bis 20 Gew.-%, und besonders bevorzugt in einer Menge von 5 Gew.-% bis 10 Gew.-% vorhanden ist, und/oder wobei der Film in Form eines Handschuhs, eines Ballons, eines Kondoms, einer Sondenabdeckung, eines Kofferdams, eines Fingerlings, eines Katheters oder eines Films vorliegt, und bevorzugt ein Handschuh ist.

17. Elastomerfilm nach den Ansprüchen 15 bis 16, wobei die durchschnittliche Dicke des gesamten Elastomerfilms zwischen 0,01 und 6,0 mm, bevorzugt zwischen 0,05 und 0,15 mm beträgt, und wobei der Film gegebenenfalls in Form eines Handschuhs vorliegt, wobei der Handschuh eine höhere mechanische Festigkeit aufweist im Vergleich zu einem Handschuh, der auf die gleiche Art hergestellt wurde, wobei der Handschuh, der auf die gleiche Art hergestellt wurde, umfasst

i) ein erstes calciumcarbonathaltiges Material mit einem Calciumcarbonatgehalt von mindestens 90 Gew.-%, bezogen auf das Gesamtgewicht des ersten calciumcarbonathaltigen Materials, und einem $d_{50}$-Wert der gewichtsmittleren Teilchengröße im Bereich von 0,6 μm bis 2 μm und einem Steilheitsfaktor von mindestens 40, oder

ii) ein zweites calciumcarbonathaltiges Material mit einem Calciumcarbonatgehalt von mindestens 90 Gew.-%, bezogen auf das Gesamtgewicht des zweiten calciumcarbonathaltigen Materials, und einem $d_{50}$-Wert der gewichtsmittleren Teilchengröße im Bereich von 0,3 μm bis 1 μm und einem Steilheitsfaktor von mindestens 20.

## Revendications

1. Composition pour la préparation d'un film élastomère comprenant :

a) au moins un latex,
b) au moins un système de durcissement,
c) au moins une composition de remplissage, dans laquelle la composition de remplissage consiste en un mélange de

i) un premier matériau comprenant du carbonate de calcium présentant une teneur en carbonate de calcium d'au moins 90 % en poids, en fonction du poids total du premier matériau comprenant du carbonate de calcium, et présentant une valeur $d_{50}$ de taille de particule moyenne en poids dans la plage de 0,6 μm à 2 μm et un facteur d'inclinaison d'au moins 40 ; et
ii) un second matériau comprenant du carbonate de calcium présentant une teneur en carbonate de calcium d'au moins 90 % en poids, en fonction du poids total du second matériau comprenant du carbonate de calcium, et présentant une valeur $d_{50}$ de taille de particule moyenne en poids dans la plage de 0,3 μm à 1 μm et un facteur d'inclinaison d'au moins 20,

dans laquelle la valeur $d_{50}$ de taille de particule moyenne en poids du premier et du second matériau comprenant du carbonate de calcium diffère de 0,1 μm à 1,1 μm.

2. Composition selon la revendication 1, dans laquelle le au moins un latex a) est un latex naturel, un latex synthétique ou un mélange de ceux-ci et de préférence est choisi dans le groupe consistant en latex naturel, latex acrylonitrile-butadiène, latex nitrile, latex nitrile carboxylé, latex polyacrylonitrile-butadiène carboxylé, latex gutta-percha, latex butadiène, latex acrylate, latex fluoro, latex styrène-butadiène, latex polystyrènebutadiène, latex styrène-isoprène-butadiène, latex isoprène synthétique, latex polyisoprène, latex propylène-éthylène, latex éthylène-propylène-diène, latex butyle, latex éthylène-acétate de vinyle, latex éthylène-méthylacrylate, latex époxide, latex polynorbornène, polyalkénylènes, latex silicone, latex polyuréthane, latex thiocol, latex halobutyle, chloropolyéthylènes, polyéthylènes chlorosulfonyles, latex polychloroprène, polyphosphazènes et un mélange de ceux-ci et le plus préférentiellement est le latex acrylonitrile-butadiène et/ou le latex polyacrylonitrile-butadiène carboxylé.

3. Composition selon l'une quelconque des revendications précédentes, dans laquelle au moins un stabilisateur est présent dans la composition et de préférence, le au moins un stabilisateur est un dodécylsulfate de sodium.

4. Composition selon l'une quelconque des revendications précédentes, dans laquelle le premier et/ou le second matériau comprenant du carbonate de calcium est/sont choisi(s) dans le groupe consistant en carbonate de calcium broyé, de préférence le marbre, le calcaire, et/ou de la craie, du carbonate de calcium précipité, de préférence la vatérite, la calcite et/ou l'aragonite, et des mélanges de ceux-ci, plus préférentiellement le matériau comprenant du carbonate de calcium est un carbonate de calcium broyé et/ou dans laquelle le rapport en poids sec du premier par rapport au second matériau comprenant du carbonate de calcium est de 5:95 à 30:70, de préférence de 8:92 à 25:75 et le plus préférentiellement de 10:90 à 20:80.

**5.** Composition selon l'une quelconque des revendications précédentes, dans laquelle le premier matériau comprenant du carbonate de calcium présente

i) une valeur $d_{50}$ de taille de particule moyenne en poids dans la plage de 0,6 $\mu$m à 2 $\mu$m, de préférence dans la plage de 0,7 $\mu$m à 1,5 $\mu$m, encore plus préférentiellement dans la plage de 0,8 $\mu$m à 1,0 $\mu$m et le plus préférentiellement d'environ 0,9 $\mu$m, et/ou

ii) une arrête supérieure ($d_{98}$) de $\leq$ 20 $\mu$m, de préférence $\leq$ 10 $\mu$m, plus préférentiellement $\leq$ 8 $\mu$m, encore plus préférentiellement $\leq$ 5 $\mu$m et le plus préférentiellement d'environ $\leq$ 4 $\mu$m, et/ou

iii) un résidu sur un tamis de 45 $\mu$m de $\leq$ 1 % en poids en fonction du poids sec total du premier matériau comprenant du carbonate de calcium, de préférence de $\leq$ 0,5 % en poids, encore plus préférentiellement de $\leq$ 0,1 % en poids, encore plus préférentiellement de $\leq$ 0,05 % en poids et le plus préférentiellement d'environ 0,01 % en poids, et/ou

iv) la quantité de particules <2 $\mu$m est $\geq$ 80 % en poids, en fonction du poids sec total du premier matériau comprenant du carbonate de calcium, de préférence $\geq$ 83 % en poids, encore plus préférentiellement $\geq$ 86 % en poids, et le plus préférentiellement d'environ 90 % en poids, et/ou

v) une teneur totale en humidité résiduelle de 0,01 % en poids à 1,5 % en poids, en fonction du poids sec total du premier matériau comprenant du carbonate de calcium, de préférence de 0,1 % en poids à 1,0 % en poids, plus préférentiellement de 0,2 % en poids à 0,8 % en poids, encore plus préférentiellement de 0,5 % en poids à 0,7 % en poids et le plus préférentiellement d'environ 0,6 % en poids, et/ou

vi) une teneur en carbonate de calcium d'au moins 93 % en poids, en fonction du poids sec total du premier matériau comprenant du carbonate de calcium, de préférence d'au moins 95 % en poids, encore plus préférentiellement d'au moins 97 % en poids et le plus préférentiellement d'environ 98 % en poids, et/ou

vii) une teneur insoluble HCl $\leq$ 10 % en poids, en fonction du poids sec total du premier matériau comprenant du carbonate de calcium, de préférence $\leq$ 7 % en poids, encore plus préférentiellement $\leq$ 5 % en poids, encore plus préférentiellement $\leq$ 3 % en poids et le plus préférentiellement d'environ 2 % en poids, et/ou

viii) un facteur d'inclinaison d'au moins 45, de préférence d'au moins 50 et le plus préférentiellement d'au moins 60 et/ou

dans laquelle le premier matériau comprenant du carbonate de calcium est utilisé sous la forme de poudre.

**6.** Composition selon l'une quelconque des revendications précédentes, dans laquelle le second matériau comprenant du carbonate de calcium présente

i) une valeur $d_{50}$ de taille de particule moyenne en poids dans la plage de 0,4 $\mu$m à 0,9 $\mu$m, de préférence dans la plage de 0,5 $\mu$m à 0,8 $\mu$m, encore plus préférentiellement dans la plage de 0,5 $\mu$m à 0,7 $\mu$m et le plus préférentiellement environ 0,6 $\mu$m, et/ou

ii) une arrête supérieure ($d_{98}$) de $\leq$ 20 $\mu$m, de préférence $\leq$ 10 $\mu$m, plus préférentiellement $\leq$ 8 $\mu$m, encore plus préférentiellement $\leq$ 5 $\mu$m et le plus préférentiellement d'environ $\leq$ 4 $\mu$m, et/ou

iii) un résidu sur un tamis de 45 $\mu$m de $\leq$ 1 % en poids en fonction du poids sec total du second matériau comprenant du carbonate de calcium, de préférence de $\leq$ 0,5 % en poids, encore plus préférentiellement de $\leq$ 0,1 % en poids, encore plus préférentiellement de $\leq$ 0,05 % en poids et le plus préférentiellement d'environ 0,01 % en poids, et/ou

iv) la quantité de particules <1 $\mu$m est $\geq$ 70 % en poids, en fonction du poids sec total du second matériau comprenant du carbonate de calcium, de préférence $\geq$ 73 % en poids, encore plus préférentiellement $\geq$ 76 % en poids, et le plus préférentiellement d'environ 80 % en poids, et/ou

v) une teneur en carbonate de calcium d'au moins 93 % en poids, en fonction du poids sec total du second matériau comprenant du carbonate de calcium, de préférence d'au moins 95 % en poids, encore plus préférentiellement d'au moins 97 % en poids, et le plus préférentiellement d'environ 97,5 % en poids, et/ou

vi) une teneur insoluble HCl $\leq$ 10 % en poids, en fonction du poids sec total du second matériau comprenant du carbonate de calcium, de préférence $\leq$ 7 % en poids, encore plus préférentiellement $\leq$ 5 % en poids, encore plus préférentiellement $\leq$ 3 % en poids, encore plus préférentiellement $\leq$ 2 % en poids et le plus préférentiellement d'environ 0,9 % en poids, et/ou

vii) un facteur d'inclinaison d'au moins 22, de préférence d'au moins 24 et le plus préférentiellement d'au moins 25 et/ou

dans laquelle le second matériau comprenant du carbonate de calcium est utilisé sous la forme d'une suspension aqueuse, de préférence sous la forme d'une suspension aqueuse présentant une teneur en solide d'au moins 30 % en poids, en fonction du poids total de la suspension aqueuse, de préférence d'au moins 40 % en poids, encore plus préférentiellement d'au moins 45 % en poids et le plus préférentiellement d'environ 50 % en poids.

**7.** Composition selon l'une quelconque des revendications précédentes présentant une valeur de pH de 7 à 13, de préférence de 8 à 12, et le plus préférentiellement de 9 à 11 et/ou

présentant une viscosité dans la plage de 50 à 200 mPa.s.

**8.** Composition selon l'une quelconque des revendications précédentes, dans laquelle le système de durcissement est présent dans la composition dans une quantité d'au moins 1 phr, en fonction du au moins un latex, de préférence dans une quantité de 2 phr à 15 phr, encore plus préférentiellement de 3 phr à 10 phr et le plus préférentiellement de 3,5 phr à 5 phr et/ou

dans laquelle la au moins une composition de remplissage est présente dans la composition dans une quantité d'au moins 1 phr, en fonction du au moins un latex, de préférence dans une quantité de 2 phr à 40 phr, encore plus préférentiellement de 3 phr à 30 phr et le plus préférentiellement de 4 phr à 25 phr.

**9.** Utilisation de la composition selon les revendications 1 à 8 pour la préparation d'un film élastomère et de préférence pour la préparation d'un gant.

**10.** Procédé de préparation d'un film élastomère comprenant les étapes de

A) fourniture d'une solution anticoagulante
B) fourniture d'au moins une composition pour la préparation d'un film élastomère selon les revendications 1 à 8 et
C) fourniture d'au moins un moule,
D) le trempage du moule de l'étape C) dans la solution de l'étape A),
E) le séchage ou le séchage partiel du moule trempé dans le coagulant de l'étape D),
F) le trempage du moule revêtu de coagulant de l'étape E) dans la composition de l'étape B) pour produire une couche de la composition de l'étape B) sur le moule revêtu de coagulant,
G) le séchage de la couche de la composition formée sur le moule revêtu de coagulant,
H) le trempage facultatif du moule obtenu dans l'étape G) dans la composition de l'étape B) pour produire une autre couche de la composition de l'étape B) et le séchage de ladite autre couche,
I) la répétition facultative de l'étape H),
J) le déversement du moule obtenu dans l'étape G) et/ou l'étape H) et/ou l'étape I) dans une solution aqueuse
K) le chauffage du moule obtenu dans l'étape J) pour produire le film élastomère total,
L) le retrait du film élastomère total du moule.

**11.** Procédé selon la revendication 10, dans lequel la teneur solide totale de la composition de l'étape B) est entre 5 % en poids à 50 % en poids, en fonction du poids total de la composition de l'étape B), de préférence entre 10 % en poids à 30 % en poids et plus préférentiellement environ 20 % en poids.

**12.** Procédé selon l'une quelconque des revendications 10 ou 11, dans lequel la au moins une solution coagulante est une composition aqueuse comprenant au moins un coagulant choisi dans le groupe consistant en nitrate de calcium, chlorure de calcium, nitrate de magnésium, acide acétique, acide formique, fluosilicate de sodium et des mélanges de ceux-ci, et de préférence est du nitrate de calcium et/ou dans lequel la au moins une solution coagulante comprend au moins un agent de démoulage choisi dans le groupe consistant en un matériau non-minéral, par exemple, une composition comprenant du chlore, un polymère de polyacrylate, polyuréthane, amidon, de préférence un amidon chimiquement modifié tel que l'amidon de maïs et un savon métallique, de préférence un stéarate de calcium et un matériau minéral, par exemple, un carbonate de métal insoluble, de préférence un carbonate de calcium ou un carbonate de magnésium, un silicate, de préférence du talc, du kaolin ou de l'argile, et de préférence du carbonate de calcium.

**13.** Procédé selon l'une quelconque des revendications 10 à 12, dans lequel l'étape J) est effectuée dans l'eau et de préférence dans de l'eau déionisée avant l'étape K).

**14.** Procédé selon l'une quelconque des revendications 10 à 13, comprenant l'étape supplémentaire de refroidissement du moule revêtu d'élastomère de l'étape K) à des températures de 15 °C à 30 °C, de préférence d'environ 20 °C avant l'étape L) et facultativement comprenant une étape de revêtement supplémentaire après l'étape K) et avant l'étape L) de traitement avec un agent de démoulage choisi dans le groupe consistant en un matériau non-minéral, par exemple, une composition comprenant du chlore, un polymère de polyacrylate, polyuréthane, amidon, de préférence un amidon chimiquement modifié tel que l'amidon de maïs et un savon métallique, de préférence un stéarate de calcium et un matériau minéral, par exemple, un carbonate de métal insoluble, de préférence un carbonate de calcium ou un carbonate de magnésium, un silicate, de préférence du talc, du kaolin ou de l'argile, et de préférence du carbonate de calcium.

15. Film élastomère produit par le procédé selon l'une quelconque des revendications 10 à 14.

16. Film élastomère selon la revendication 15, dans lequel la matière de remplissage dans le film élastomère est présente dans une quantité de 1 % en poids à 40 % en poids, en fonction du poids total du film élastomère, de préférence dans une quantité de 5 % en poids à 20 % en poids et plus préférentiellement dans une quantité de 5 % en poids à 10 % en poids et/ou dans lequel le film est sous la forme d'un gant, d'un ballon, d'un préservatif, un revêtement de sonde, une digue dentaire, un bout de doigt, un cathéter ou un film et de préférence est un gant.

17. Film élastomère selon les revendications 15 à 16, dans lequel l'épaisseur moyenne du film élastomère total est entre 0,01 et 6.0 mm, de préférence entre 0,05 et 0,15 mm et facultativement dans lequel le film est sous la forme d'un gant dans lequel le gant présente une résistance mécanique supérieure comparé à un gant qui a été préparé de la même façon, dans lequel ledit gant qui a été préparé de la même façon comprend

i) un premier matériau comprenant du carbonate de calcium présentant une teneur en carbonate de calcium d'au moins 90 % en poids sur le poids total du premier matériau comprenant du carbonate de calcium et présentant une valeur d50 de taille de particule moyenne en poids dans la plage de 0,6 $\mu$m à 2 $\mu$m et un facteur d'inclinaison d'au moins 40 ou
ii) un second matériau comprenant du carbonate de calcium présentant une teneur en carbonate de calcium d'au moins 90 % en poids, en fonction du poids total du second matériau comprenant du carbonate de calcium et présentant une valeur $d_{50}$ de taille de particule moyenne en poids dans la plage de 0,3 $\mu$m à 1 $\mu$m et un facteur d'inclinaison d'au moins 20.

**EP 3 775 016 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1962626 B1
- GB 2501940 A
- EP 1904569 B1
- WO 2004044037 A1
- WO 2012087460 A1
- US 20130316107 A1

- EP 2447213 A1
- EP 2524898 A1
- EP 2371766 A1
- EP 2840065 A1
- WO 2013142473 A1